(19) **Europäisches Patentamt / European Patent Office / Office européen des brevets**

(11) **EP 4 266 773 A2**

(12) # EUROPEAN PATENT APPLICATION

(43) Date of publication:
**25.10.2023 Bulletin 2023/43**

(21) Application number: **23178937.1**

(22) Date of filing: **01.04.2019**

(51) International Patent Classification (IPC):
**H04W 68/00** (2009.01)

(52) Cooperative Patent Classification (CPC):
**H04W 68/005**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.04.2018 CN 201810298396**

(62) Document number(s) of the earlier application(s) in accordance with Art. 76 EPC:
**19781628.3 / 3 768 006**

(71) Applicant: **Huawei Technologies Co., Ltd.**
**Shenzhen, Guangdong 518129 (CN)**

(72) Inventors:
• **Li, Bingzhao**
**Shenzhen, 518129 (CN)**

• **Chai, Li**
**Shenzhen, 518129 (CN)**
• **Chen, Lei**
**Shenzhen, 518129 (CN)**

(74) Representative: **Epping - Hermann - Fischer Patentanwaltsgesellschaft mbH**
**Schloßschmidstraße 5**
**80639 München (DE)**

Remarks:
•This application was filed on 13.06.2023 as a divisional application to the application mentioned under INID code 62.
•Claims filed after the date of filing of the application / after the date of receipt of the divisional application (Rule 68(4) EPC).

(54) **METHOD, DEVICE AND SYSTEM FOR MONITORING PAGING MESSAGE AND TRANSMITTING INDICATION INFORMATION**

(57) A method for monitoring paging message, a method for sending indication information, a device, and a system are provided, and relate to the field of communications technologies. The method includes: receiving, by a terminal device, paging occasion configuration information sent by a network device, and monitoring, based on N time domain resources, a paging message sent by the network device. The paging occasion configuration information indicates the N time domain resources in a paging occasion, and N is a positive integer greater than or equal to 1. In this technical solution, the network device can indicate, to the terminal device, the time domain resource that is in the paging occasion and that is used to monitor the paging message. This helps improve flexibility of a paging message monitoring mechanism.

```
┌─────────────────┐                          ┌─────────────────┐
│ Network device  │                          │ Terminal device │
└─────────────────┘                          └─────────────────┘
         │                                             │
┌──────────────────────────────────────────────┐      │
│ Step 210: Generate paging occasion            │      │
│ configuration information                     │      │
└──────────────────────────────────────────────┘      │
         │   Step 220: Paging occasion configuration   │
         │   information                               │
         │ ──────────────────────────────────────────> │
         │      ┌──────────────────────────────────────────────┐
         │      │ Step 230: Monitor, based on N time domain     │
         │      │ resources, a paging message sent by the       │
         │      │ network device                                │
         │      └──────────────────────────────────────────────┘
         │                                             │
```

FIG. 2

EP 4 266 773 A2

## Description

This application claims priority to Chinese Patent Application No. 201810298396.0, filed with the Chinese Patent Office on April 3, 2018 and entitled "PAGING MESSAGE MONITORING METHOD, INDICATION INFORMATION SENDING METHOD, DEVICE, AND SYSTEM", which is incorporated herein by reference in its entirety.

## TECHNICAL FIELD

This application relates to the field of communications technologies, and in particular, to a paging message monitoring method, an indication information sending method, a device, and a system.

## BACKGROUND

In long term evolution (long term evolution, LTE), a terminal device determines, by monitoring a paging message, whether the terminal device is paged, whether a system message changes, whether there is a warning indication of an earthquake and tsunami warning system (earthquake and tsunami warning system, ETRS), and so on.

A terminal device in an idle (idle) mode monitors the paging message in a discontinuous reception (discontinuous reception, DRX) manner, to reduce power consumption of the terminal device. In one DRX cycle, the terminal device monitors, only in a paging occasion (PO) in a corresponding paging frame (PF), whether a paging radio network temporary identifier (paging radio network temporary identity, P-RNTI) exists on a physical downlink control channel (physical downlink control channel, PDCCH), to determine whether a corresponding physical downlink shared channel (physical downlink shared channel, PDSCH) carries a paging message. The PF corresponds to a radio frame in LTE, and the PO corresponds to a subframe in LTE. The terminal device learns of, by using the PF and the PO, a subframe in which the terminal device is to monitor the paging message. Usually, to further reduce the power consumption of the terminal device, the terminal device monitors at most one PF and one PO in one DRX cycle. Specifically, a value of the PF is determined by using the following formula:

$$\text{SFN mod } T = (T \text{ div } N)(UE\_ID \text{ mod } N)$$

A value of the PO is determined by using the following formula:
$i\_s = Floor(UE\_ID/N) \text{ mod } Ns$, where in frequency division duplex (frequency division duplexing, FDD) LTE, a correspondence between a value of the PO and $i\_s$ may be shown in Table 1.

**Table 1**

| Ns | PO (i_s=0) | PO (i_s=1) | PO (i_s=2) | PO (i_s=3) | |
|---|---|---|---|---|---|
| 1 | 9 | N/A | N/A | N/A | |
| 2 | 4 | 9 | N/A | N/A | |
| 4 | 0 | 4 | 5 | 9 | |

SFN is the value of the PF, and is a frame number of the radio frame corresponding to the PF. T is a smaller one between a default DRX cycle and a specific DRX cycle. The default DRX cycle is broadcast by a network device to the terminal device through an S1 interface, a value of the default DRX cycle may be 32, 64, 128, or 256, and the default DRX cycle is expressed in a quantity radio frames. The specific DRX cycle is configured by the network device for the terminal device by using a radio resource control (radio resource control, RRC) message, a value of the specific DRX cycle may be 32, 64, 128, or 256, and the specific DRX cycle is expressed in a quantity radio frames. $N = min(T, nB)$, and N is a quantity of paging frames in the DRX cycle. $nB = 4T, 2T, T, T/2, T/4, T/8, T/16$, or $T/32$, and nB is broadcast by the network device to the terminal device through the S1 interface. $UE\_ID = IMSI \text{ mod } 1024$, and IMSI is a unique international identifier of the terminal device. $Ns = max(1, nB/T)$, and Ns is a quantity of POs in the PF. For example, if $nB = T/2$ and $Ns = 1$, one PF includes only one PO.

It can be learned from Table 1 that in FDD LTE, in the foregoing manner, POs may occur only in subframes 0, 4, 5, and 9 in the radio frame, and duration and positions of the POs are basically fixed. Consequently, flexibility of an existing paging message monitoring mechanism is relatively poor.

**SUMMARY**

Embodiments of this application provide a paging message monitoring method, an indication information sending method, a device, and a system, to improve flexibility of a paging message monitoring mechanism.

According to a first aspect, a paging message monitoring method in an embodiment of this application includes: A terminal device receives paging occasion configuration information sent by a network device, and monitors, based on N time domain resources, a paging message sent by the network device. The paging occasion configuration information indicates the N time domain resources in a paging occasion, and N is a positive integer greater than or equal to 1.

In this embodiment of this application, the network device can indicate, to the terminal device, the time domain resource that is in the paging occasion and that is used to monitor the paging message. This helps improve flexibility of a paging message monitoring mechanism.

For ease of implementation, in a possible design, the paging occasion configuration information includes at least one of the following information: a quantity of the time domain resources, duration of each time domain resource, duration of an interval between every two adjacent time domain resources, and time domain position offset information. The time domain position offset information indicates an offset of a first time domain position relative to a second time domain position, the first time domain position is a start position of a time domain resource ranking first in a time sequence, and the second time domain position is any time domain position in a synchronization signal block, or the second time domain position is a start time domain position of a paging frame.

In a possible design, the time domain position offset information includes first offset information and second offset information. The first offset information indicates an offset of a start position of the paging occasion relative to the second time domain position; and the second offset information indicates an offset of the first time domain position relative to the start position of the paging occasion. The foregoing technical method helps flexibly indicate a time domain position offset.

In a possible design, the terminal device determines a quantity M of beams used for communication with the network device, where M is a positive integer greater than or equal to 1; the terminal device divides the N time domain resources into M time units, where each of the M beams corresponds to one of the M time units, and the M beams correspond to different time units; and then, the terminal device monitors, in a time unit corresponding to each of at least one beam in the M beams, the paging message sent by the network device.

The foregoing technical solution helps reduce power consumption when the terminal device monitors the paging message.

In a possible design, the terminal device determines, based on a quantity of beams actually used by the network device to send synchronization signal blocks to the terminal device, the quantity M of beams used for communication with the network device. The foregoing technical solution helps reduce signaling overheads.

In a possible design, the terminal device receives beam configuration information sent by the network device, where the beam configuration information indicates the quantity of beams used for communication with the network device, or the beam configuration information indicates duration for monitoring the paging message on one beam; and then, the terminal device determines, based on the beam configuration information, the quantity M of beams used for communication with the network device. The foregoing technical solution helps simplify a manner of determining the quantity of beams used for communication between the terminal device and the network device.

In a possible design, the terminal device determines the at least one beam in the M beams based on signal received quality corresponding to each of the M beams. The foregoing technical solution helps further reduce the power consumption when the terminal device monitors the paging message.

According to a second aspect, an indication information sending method in an embodiment of this application includes:

A network device generates paging occasion configuration information, and sends the paging occasion configuration information to a terminal device, where the paging occasion configuration information indicates N time domain resources. The paging occasion configuration information indicates the N time domain resources in a paging occasion, and N is a positive integer greater than or equal to 1. In this embodiment of this application, the network device can indicate, to the terminal device, the time domain resource that is in the paging occasion and that is used to monitor the paging message. This helps improve flexibility of a paging message monitoring mechanism.

For ease of implementation, in a possible design, the paging occasion configuration information includes at least one of the following information: a quantity of the time domain resources, duration of each time domain resource, duration of an interval between every two adjacent time domain resources, and time domain position offset information. The time domain position offset information indicates an offset of a first time domain position relative to a second time domain position, the first time domain position is a start position of a time domain resource ranking first in a time sequence, and the second time domain position is any time domain position in a synchronization signal block, or the second time domain position is a start time domain position of a paging frame.

In a possible design, the time domain position offset information includes first offset information and second offset information. The first offset information indicates an offset of a start position of the paging occasion relative to the second time domain position; and the second offset information indicates an offset of the first time domain position relative to the start position of the paging occasion. The foregoing technical method helps flexibly indicate a time domain position offset.

In a possible design, the network device sends beam configuration information to the terminal device, where the beam configuration information indicates a quantity of beams used for communication with the network device, or the beam configuration information indicates duration for monitoring a paging message on one beam. The foregoing technical solution helps simplify a manner of determining the quantity of beams used for communication between the terminal device and the network device.

According to a third aspect, a paging message monitoring method in an embodiment of this application includes: A terminal device receives frequency domain configuration information sent by a network device, where the frequency domain configuration information indicates Q frequency domain resources, and Q is a positive integer greater than or equal to 1; and

the terminal device determines, based on the Q frequency domain resources, a frequency domain resource used to monitor a paging message; and monitors, on the determined frequency domain resource in a paging occasion, the paging message sent by the network device.

It should be noted that in this embodiment of this application, that the terminal device determines, based on the Q frequency domain resources, a frequency domain resource used to monitor a paging message may be: determining, from the Q frequency domain resources, the frequency domain resource used to monitor the paging message, or determining, from the Q frequency domain resources and an initial frequency domain resource, the frequency domain resource used to monitor the paging message. This is not limited. The initial frequency domain resource is a frequency domain resource used by the terminal device to receive a system message

The foregoing technical solution helps reduce power consumption of the terminal device.

For simplification of a manner of determining the frequency domain resource used to monitor the paging message, in a possible design, the frequency domain configuration information further indicates an index corresponding to each of the Q frequency domain resources; and the terminal device determines, based on the indexes corresponding to the Q frequency domain resources and an identifier of the terminal device, the frequency domain resource used to monitor the paging message, where the identifier of the terminal device and an index corresponding to the frequency domain resource used to monitor the paging message meet a preset relationship.

In a possible design, the identifier of the terminal device and the index corresponding to the frequency domain resource used to monitor the paging message meet:

$$\text{index}=P \bmod Q; \text{ or } \text{index}=P \bmod (Q+1),$$

where

index is the index corresponding to the frequency domain resource used to monitor the paging message, and P is a ratio of the identifier of the terminal device to a quantity of paging occasions in one paging cycle, or P is a value obtained after the identifier of the terminal device is reversed.

For simplification of a manner of indicating the frequency domain resources, in a possible design, the frequency domain configuration information includes a carrier of each of the Q frequency domain resources and a bandwidth of each of the Q frequency domain resources.

In a possible design, the frequency domain configuration information further includes at least one of a control resource set of each of the Q frequency domain resources, search space corresponding to each of the Q frequency domain resources, and a correspondence between each of the Q frequency domain resources and a physical cell identifier PCI; and the terminal device monitors, in the paging occasion, the paging message based on the at least one of the control resource set of the frequency domain resource, the search space of the frequency domain resource, and the PCI corresponding to the frequency domain resource, on the frequency domain resource used to monitor the paging message.

According to a fourth aspect, an indication information sending method in an embodiment of this application includes:

A network device generates frequency domain configuration information, where the frequency domain configuration information indicates Q frequency domain resources, and Q is a positive integer greater than or equal to 1; and then, the network device sends the frequency domain configuration information to a terminal device.

In a possible design, the frequency domain configuration information further indicates an index corresponding to each of the Q frequency domain resources, where an identifier of the terminal device and an index corresponding to a frequency domain resource used by the terminal device to monitor a paging message meet a preset relationship.

In a possible design, the identifier of the terminal device and the index corresponding to the frequency domain resource used by the terminal device to monitor the paging message meet:

$$\text{index}=P \bmod Q; \text{ or index}=P \bmod (Q+1),$$

where

index is the index associated with the frequency domain resource used by the terminal device to monitor the paging message, and P is a ratio of the identifier of the terminal device to a quantity of paging occasions in one paging cycle, or P is a value obtained after the identifier of the terminal device is reversed.

In a possible design, the frequency domain resource configuration information includes a carrier of each of the Q frequency domain resources and a bandwidth of each of the Q frequency domain resources.

In a possible design, the frequency domain configuration information further includes at least one of a control resource set of each of the Q frequency domain resources, search space corresponding to each of the Q frequency domain resources, and a correspondence between each of the Q frequency domain resources and a physical cell identifier PCI.

According to a fifth aspect, a communication apparatus in an embodiment of this application includes a transceiver unit and a processing unit. The transceiver unit is configured to receive paging occasion configuration information sent by a network device, where the paging occasion configuration information indicates N time domain resources in a paging occasion, and N is a positive integer greater than or equal to 1; and the processing unit is configured to monitor, based on the N time domain resources, a paging message sent by the network device.

In a possible design, the paging occasion configuration information includes at least one of the following information: a quantity of the time domain resources, duration of each time domain resource, duration of an interval between every two adjacent time domain resources, and time domain position offset information. The time domain position offset information indicates an offset of a first time domain position relative to a second time domain position, the first time domain position is a start position of a time domain resource ranking first in a time sequence, and the second time domain position is any time domain position in a synchronization signal block, or the second time domain position is a start time domain position of a paging frame.

In a possible design, the time domain position offset information includes first offset information and second offset information. The first offset information indicates an offset of a start position of the paging occasion relative to the second time domain position. The second offset information indicates an offset of the first time domain position relative to the start position of the paging occasion. In a possible design, the processing unit is further configured to: determine a quantity M of beams used for communication with the network device, and divide the N time domain resources into M time units, where M is a positive integer greater than or equal to 1, each of the M beams corresponds to one of the M time units, and the M beams correspond to different time units; and then, monitor, in a time unit corresponding to each of at least one beam in the M beams, the paging message sent by the network device. In a possible design, the processing unit is configured to determine, based on a quantity of beams actually used by the network device to send synchronization signal blocks to the terminal device, the quantity M of beams used for communication with the network device.

In a possible design, the transceiver unit is further configured to receive beam configuration information sent by the network device, where the beam configuration information indicates the quantity of beams used for communication with the network device, or the beam configuration information indicates duration for monitoring the paging message on one beam; and the processing unit is configured to determine, based on the beam configuration information, the quantity M of beams used for communication with the network device.

In a possible design, the processing unit is further configured to determine the at least one beam in the M beams based on signal received quality corresponding to each of the M beams.

Effects achieved by the possible designs of the communication apparatus according to the fifth aspect are the same as effects achieved by the corresponding possible designs of the method according to the first aspect. Details are not described again.

According to a sixth aspect, a communication apparatus in an embodiment of this application includes a processing unit and a transceiver unit. The processing unit is configured to generate paging occasion configuration information, where the paging occasion configuration information indicates N time domain resources in a paging occasion, and N is a positive integer greater than or equal to 1; and the transceiver unit is configured to send the paging occasion configuration information to a terminal device, where the paging occasion configuration information indicates the N time domain resources.

In a possible design, the paging occasion configuration information includes at least one of the following information: a quantity of the time domain resources, duration of each time domain resource, duration of an interval between every two adjacent time domain resources, and time domain position offset information. The time domain position offset information indicates an offset of a first time domain position relative to a second time domain position, the first time domain position is a start position of a time domain resource ranking first in a time sequence, and the second time domain position is any time domain position in a synchronization signal block, or the second time domain position is a start time domain position of a paging frame.

In a possible design, the time domain position offset information includes first offset information and second offset information. The first offset information indicates an offset of a start position of the paging occasion relative to the second time domain position. The second offset information indicates an offset of the first time domain position relative to the start position of the paging occasion. In a possible design, the transceiver unit is further configured to send beam configuration information to the terminal device, where the beam configuration information indicates a quantity of beams used for communication with the network device, or the beam configuration information indicates duration for monitoring a paging message on one beam.

Effects achieved by the possible designs of the communication apparatus according to the sixth aspect are the same as effects achieved by the corresponding possible designs of the method according to the second aspect. Details are not described again.

According to a seventh aspect, a communication apparatus in an embodiment of this application includes a processing unit and a transceiver unit. The transceiver unit is configured to receive frequency domain configuration information sent by a network device, where the frequency domain configuration information indicates Q frequency domain resources, and Q is a positive integer greater than or equal to 1; and the processing unit is configured to: determine, based on the Q frequency domain resources, a frequency domain resource used to monitor a paging message; and monitor, on the determined frequency domain resource in a paging occasion, the paging message sent by the network device.

In a possible design, the frequency domain configuration information further indicates an index corresponding to each of the Q frequency domain resources; and the processing unit is configured to determine, based on the indexes corresponding to the Q frequency domain resources and an identifier of the terminal device, the frequency domain resource used to monitor the paging message, where the identifier of the terminal device and an index corresponding to the frequency domain resource used to monitor the paging message meet a preset relationship.

In a possible design, the identifier of the terminal device and the index corresponding to the frequency domain resource used to monitor the paging message meet:

$$\text{index}=P \bmod Q; \text{ or index}=P \bmod (Q+1),$$

where

index is the index corresponding to the frequency domain resource used to monitor the paging message, and P is a ratio of the identifier of the terminal device to a quantity of paging occasions in one paging cycle, or P is a value obtained after the identifier of the terminal device is reversed.

In a possible design, the frequency domain configuration information includes a carrier of each of the Q frequency domain resources and a bandwidth of each of the Q frequency domain resources.

In a possible design, the frequency domain configuration information further includes at least one of a control resource set of each of the Q frequency domain resources, search space corresponding to each of the Q frequency domain resources, and a correspondence between each of the Q frequency domain resources and a physical cell identifier PCI; and the processing unit is configured to monitor, in the paging occasion, the paging message based on the at least one of the control resource set of the frequency domain resource, the search space of the frequency domain resource, and the PCI corresponding to the frequency domain resource, on the frequency domain resource used to monitor the paging message.

Effects achieved by the possible designs of the communication apparatus according to the seventh aspect are the same as effects achieved by the corresponding possible designs of the method according to the third aspect. Details are not described again.

According to an eighth aspect, a communication apparatus in an embodiment of this application includes a processing unit and a transceiver unit. The processing unit is configured to generate frequency domain configuration information, where the frequency domain configuration information indicates Q frequency domain resources, and Q is a positive integer greater than or equal to 1; and the transceiver unit is configured to send the frequency domain configuration information to a terminal device.

In a possible design, the frequency domain configuration information further indicates an index corresponding to each of the Q frequency domain resources, where an identifier of the terminal device and an index corresponding to a frequency domain resource used by the terminal device to monitor a paging message meet a preset relationship.

In a possible design, the identifier of the terminal device and the index corresponding to the frequency domain resource used by the terminal device to monitor the paging message meet:

$$\text{index=P mod Q; or index=P mod (Q+1),}$$

where

index is the index associated with the frequency domain resource used by the terminal device to monitor the paging message, and P is a ratio of the identifier of the terminal device to a quantity of paging occasions in one paging cycle, or P is a value obtained after the identifier of the terminal device is reversed.

In a possible design, the frequency domain resource configuration information includes a carrier of each of the Q frequency domain resources and a bandwidth of each of the Q frequency domain resources.

In a possible design, the frequency domain configuration information further includes at least one of a control resource set of each of the Q frequency domain resources, search space corresponding to each of the Q frequency domain resources, and a correspondence between each of the Q frequency domain resources and a physical cell identifier PCI.

Effects achieved by the possible designs of the communication apparatus according to the eighth aspect are the same as effects achieved by the corresponding possible designs of the method according to the fourth aspect. Details are not described again. According to a ninth aspect, a communication apparatus is provided. The communication apparatus includes a processor and a transceiver. The processor performs a function of the processing unit in the fifth aspect, and the transceiver performs a function of the transceiver unit in the fifth aspect.

According to a tenth aspect, a communication apparatus is provided. The communication apparatus includes a processor and an interface. The processor performs a function of the processing unit in the fifth aspect, and the interface performs a function of the transceiver unit in the fifth aspect.

According to an eleventh aspect, a communication apparatus is provided. The communication apparatus includes a memory, a processor, and a program that is stored in the memory and is capable of being run on the processor. When the processor executes the program, the method according to any one of the first aspect or the possible designs of the first aspect is implemented. It should be noted that the memory may be a non-volatile memory, or may be a volatile memory. The memory may be located inside the communication apparatus, or may be located outside the communication apparatus.

According to a twelfth aspect, a communication apparatus is provided. The communication apparatus may implement the method according to any one of the first aspect or the possible designs of the first aspect. The communication apparatus may be a terminal device, or may be hardware implementing a similar function.

According to a thirteenth aspect, a communication apparatus is provided. The communication apparatus may implement the method according to any one of the second aspect or the possible designs of the second aspect. The communication apparatus may be a network device, or may be hardware implementing a similar function.

According to a fourteenth aspect, a communication apparatus is provided. The communication apparatus includes at least one processor. The processor is coupled to a memory, and the processor is configured to: read instruction(s) in the memory, and perform, according to the instruction(s), the method according to any one of the second aspect or the possible designs of the second aspect. According to a fifteenth aspect, a communication apparatus is provided. The communication apparatus includes a processor and a transceiver. The processor performs a function of the processing unit in the sixth aspect, and the transceiver performs a function of the transceiver unit in the sixth aspect.

According to a sixteenth aspect, a communication apparatus is provided. The communication apparatus includes a processor and an interface. The processor performs a function of the processing unit in the sixth aspect, and the interface performs a function of the transceiver unit in the sixth aspect.

According to a seventeenth aspect, a communication apparatus is provided. The communication apparatus includes a memory, a processor, and a program that is stored in the memory and is capable of being run on the processor. When the processor executes the program, the method according to any one of the third aspect or the possible designs of the third aspect is implemented. It should be noted that the memory may be a non-volatile memory, or may be a volatile memory. The memory may be located inside the communication apparatus, or may be located outside the communication apparatus.

According to an eighteenth aspect, a communication apparatus is provided. The communication apparatus may implement the method according to any one of the third aspect or the possible designs of the third aspect. The communication apparatus may be a terminal device, or may be hardware implementing a similar function.

According to a nineteenth aspect, a communication apparatus is provided. The communication apparatus may implement the method according to any one of the fourth aspect or the possible designs of the fourth aspect. The communication apparatus may be a network device, or may be hardware implementing a similar function.

According to a twentieth aspect, a communication apparatus is provided. The communication apparatus includes at least one processor. The processor is coupled to a memory, and the processor is configured to: read instruction(s) in the memory, and perform, according to the instruction(s), the method according to any one of the fourth aspect or the possible designs of the fourth aspect. According to a twenty-first aspect, a computer-readable storage medium is provided.

The computer-readable storage medium stores instruction(s); when the instruction(s) is/are executed, the method according to any one of the first aspect to the fourth aspect or the possible designs of the first aspect to the fourth aspect is implemented.

According to a twenty-second aspect, an embodiment of this application further provides a communications system, including the communication apparatus according to any one of the fifth aspect or the possible designs of the fifth aspect, and the communication apparatus according to any one of the sixth aspect or the possible designs of the sixth aspect.

According to a twenty-third aspect, an embodiment of this application further provides a communications system, including the communication apparatus according to any one of the seventh aspect or the possible designs of the seventh aspect, and the communication apparatus according to any one of the eighth aspect or the possible designs of the eighth aspect.

**BRIEF DESCRIPTION OF DRAWINGS**

FIG. 1 is a schematic architectural diagram of a possible mobile communications system to which the embodiments of this application are applicable;
FIG. 2 is a schematic flowchart of a paging message monitoring method according to an embodiment of this application;
FIG. 3a is a schematic diagram of a paging occasion according to an embodiment of this application;
FIG. 3b is a schematic diagram of a paging occasion according to an embodiment of this application;
FIG. 4 is a schematic diagram of time domain resources used to monitor a paging message according to an embodiment of this application;
FIG. 5a is a schematic diagram of a paging frame according to an embodiment of this application;
FIG. 5b is a schematic diagram of a paging frame according to an embodiment of this application;
FIG. 6 is a schematic diagram of time domain resources used to monitor a paging message according to an embodiment of this application;
FIG. 7 is a schematic diagram of beams according to an embodiment of this application;
FIG. 8 is a schematic diagram of time units according to an embodiment of this application;
FIG. 9 is a schematic flowchart of another paging message monitoring method according to an embodiment of this application;
FIG. 10 is a schematic diagram of frequency domain resources used to monitor a paging message according to an embodiment of this application;
FIG. 11 is a schematic diagram of a communication apparatus according to an embodiment of this application;
FIG. 12 is a schematic diagram of a communication apparatus according to an embodiment of this application;
FIG. 13 is a schematic diagram of a communication apparatus according to an embodiment of this application;
FIG. 14 is a schematic diagram of a communication apparatus according to an embodiment of this application;
FIG. 15 is a schematic diagram of a communication apparatus according to an embodiment of this application;
FIG. 16 is a schematic diagram of a communication apparatus according to an embodiment of this application;
FIG. 17 is a schematic diagram of a communication apparatus according to an embodiment of this application;
FIG. 18 is a schematic diagram of a communication apparatus according to an embodiment of this application;
FIG. 19 is a schematic diagram of a communication apparatus according to an embodiment of this application;
FIG. 20 is a schematic diagram of a communication apparatus according to an embodiment of this application;
FIG. 21 is a schematic diagram of a communication apparatus according to an embodiment of this application;
FIG. 22 is a schematic diagram of a communication apparatus according to an embodiment of this application;
FIG. 23 is a schematic diagram of a communication apparatus according to an embodiment of this application; and
FIG. 24 is a schematic diagram of a communication apparatus according to an embodiment of this application.

**DESCRIPTION OF EMBODIMENTS**

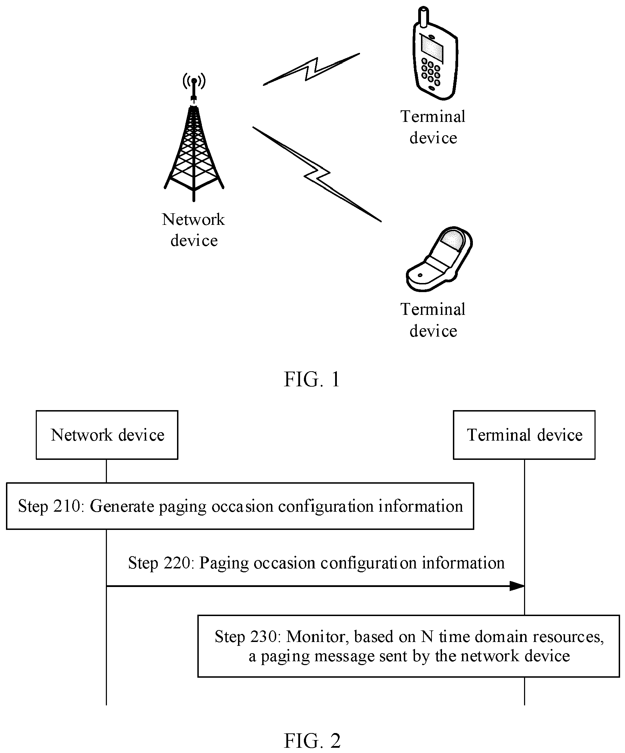

The following describes the embodiments of this application with reference to the accompanying drawings of this specification. FIG. 1 is a schematic architectural diagram of a possible mobile communications system to which the embodiments of this application are applicable. The mobile communications system shown in FIG. 1 includes a network device and a terminal device. It should be understood that FIG. 1 is only a schematic architectural diagram of the mobile communications system. A quantity of network devices and a quantity of terminal devices in the mobile communications system are not limited in the embodiments of this application. In addition, in addition to the network device and the terminal device, the mobile communications system to which the embodiments of this application are applicable may further include another device, such as a core network device, a wireless relay device, or a wireless backhaul device. This is not limited in the embodiments of this application either. In addition, the network device in the embodiments of this application may integrate all functions into one independent physical device, or may distribute the functions on a plurality of independent physical devices. This is not limited in the embodiments of this application either. In addition, the terminal device in the embodiments of this application may be connected to the network device in a wireless manner. It should be further noted that the terminal device in the embodiments of this application may be at a fixed location, or may be mobile.

The network device in the embodiments of this application is configured to enable the terminal device to access the mobile communications system. Specifically, the network device may be a NodeB (NodeB), an evolved NodeB (evolved NodeB, eNB), a base station in 5G, a base station in a future mobile communications system, an access point in a wireless fidelity (wireless fidelity, Wi-Fi) system, or the like. A specific technology and a specific device form that are used for the network device are not limited. The terminal device in the embodiments of this application may also be referred to as a terminal (terminal), user equipment (user equipment, UE), a mobile station (mobile station, MS), a mobile terminal (mobile terminal, MT), or the like. Specifically, the terminal device may be a mobile phone (mobile phone), a tablet computer (pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. This is not limited.

It should be understood that the network device and the terminal device in the embodiments of this application may be deployed on the land, including an indoor device, an outdoor device, a handheld device, or a vehicle-mounted device; may be deployed on the water; or may be deployed on an airplane, a balloon, and a satellite in the air. Application scenarios of the network device and the terminal device are not limited.

It should be understood that in the embodiments of this application, communication between the network device and the terminal device and communication between terminal devices may be performed by using a licensed spectrum (licensed spectrum), or may be performed by using an unlicensed spectrum (unlicensed spectrum), or may be performed by using both a licensed spectrum and an unlicensed spectrum. This is not limited. Communication between the network device and the terminal device and communication between the terminal devices may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used between the network device and the terminal device is not limited in the embodiments of this application.

The following explains some terms in the embodiments of this application, to facilitate understanding by a person skilled in the art.

1. Paging occasion: A terminal device monitors, on some or all time domain resources on which the paging occasion is located, a paging message sent by a network device. The paging occasion in the embodiments of this application may include one or more radio frames, subframes, slots, or the like.

2. Time domain resource: The time domain resource in the embodiments of this application is a time interval, for example, a radio frame, a subframe, a slot (slot), a symbol, or a mini-slot (mini-slot). This is not limited.

3. Beam (wave beam): The beam is a radio signal transmitted directionally. Specifically, in a 5th generation mobile communications system (5th-generation, 5G), synchronization signal blocks (synchronous signal, SSB) may be transmitted in various directions in a form of beams, and one directionally transmitted SSB may be referred to as one beam.

FIG. 2 is a schematic flowchart of a paging message monitoring method according to an embodiment of this application. Specifically, the following steps are included.

Step 210: A network device generates paging occasion configuration information. The paging occasion configuration information indicates N time domain resources in a paging occasion, and N is a positive integer greater than or equal to 1.

It should be noted that the N time domain resources in the embodiments of this application may be consecutive time domain resources, or may be nonconsecutive time domain resources. This is not limited. In addition, duration of each of the N time domain resources may be configured based on a requirement. This is not limited.

For example, a beam is introduced to 5G, and the network device needs to send a paging message on each beam used for communication with a terminal device. Therefore, a paging occasion configured by the network device for the terminal device may be relatively long. In this case, optionally, total duration of the paging occasion is not less than total duration for sending the paging message on all beams used for communication with the terminal device. When there are relatively more beams used for communication between the network device and the terminal device, if all time domain resources included in the paging occasion are used to monitor the paging message, the total duration of the time domain resources used to monitor the paging message may be excessively long. This affects normal communication between the network device and the terminal device. Optionally, the paging occasion further includes another time domain resource in addition to the N time domain resources, to ensure normal communication between the network device and the terminal device. The network device and the terminal device may transmit data (for example, system information, uplink data, or dedicated data) by using the another time domain resource included in the paging occasion.

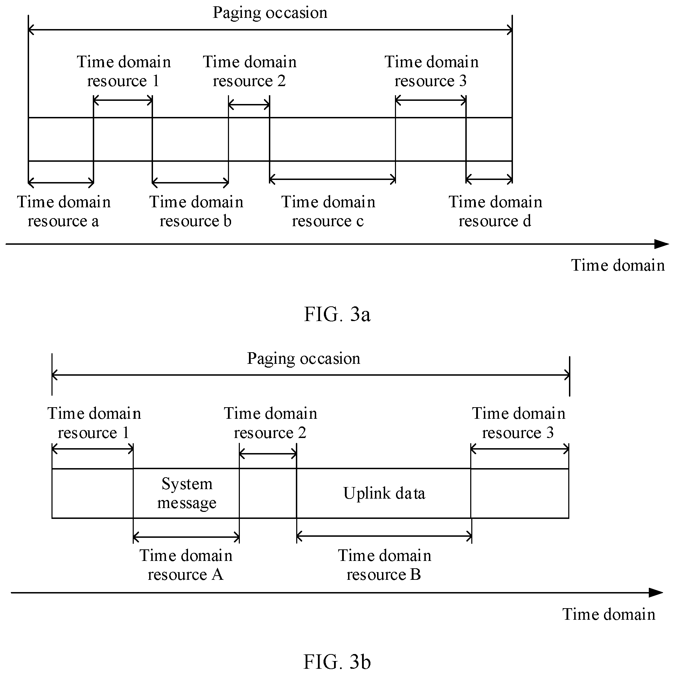

For example, a value of N is 3. For example, FIG. 3a is a schematic diagram of a possible paging occasion. The paging occasion includes a time domain resource a, a time domain resource 1, a time domain resource b, a time domain resource 2, a time domain resource c, a time domain resource 3, and a time domain resource d. The time domain resource 1, the time domain resource 2, and the time domain resource 3 are time domain resources used to monitor the paging message, and the time domain resource a, the time domain resource b, the time domain resource c, and the time domain resource d are used to send a system message, schedule dedicated data, transmit uplink data, and so on. When the paging occasion is that shown in FIG. 3a, the paging occasion configuration information indicates the time domain resource 1, the time domain resource 2, and the time domain resource 3 in the paging occasion. For another example, FIG. 3b is a schematic diagram of another possible paging occasion. The paging occasion includes a time domain resource 1, a time domain resource A, a time domain resource 2, a time domain resource B, and a time domain resource 3. The time domain resource 1, the time domain resource 2, and the time domain resource 3 are time domain resources used to monitor the paging message, the time domain resource A is used to transmit a system message, and the time domain resource B is used to transmit uplink data. When the paging occasion is that shown in FIG. 3b, the paging occasion configuration information indicates the time domain resource 1, the time domain resource 2, and the time domain resource 3 in the paging occasion.

In addition, optionally, in this embodiment of this application, the network device may determine, based on time percentages of different tasks for monitoring the paging message, sending the system information, transmitting the uplink data, and so on, the N time domain resources in the paging occasion that are used to monitor the paging message. For example, the network device may determine, for the terminal device based on the time percentages of the different tasks for monitoring the paging message, sending the system information, transmitting the uplink data, and so on, a quantity of time domain resources that are included in one paging occasion and are used to monitor the paging message, duration of each time domain resource used to monitor the paging message, and an interval between adjacent time domain resources. The paging occasion shown in FIG. 3b is used as an example. The system message needs to be transmitted on the time domain resource A. Therefore, the time domain resource A needs to be reserved to transmit the system message, and cannot be used to monitor the paging message. The uplink data needs to be transmitted on the time domain resource B. Therefore, the time domain resource B needs to be reserved to transmit the uplink data, and cannot be used to monitor the paging message. Total duration of the time domain resource 1, the time domain resource 2, and the time domain resource 3 is not less than a sum of duration for monitoring the paging message by the terminal device on all beams used for communication with the network device.

Step 220: The network device sends the paging occasion configuration information to the terminal device.

In this embodiment of this application, the network device may send the paging occasion configuration information to the terminal device by using a system broadcast message. The system broadcast message may be sib1 or sib2. When the network device communicates with the terminal device by using a plurality of beams, to ensure that the terminal device can receive the paging occasion configuration information in each beam direction, the network device needs to send, to the terminal device in each beam direction, the system broadcast message including the paging occasion configuration information.

Step 230: After receiving the paging occasion configuration information sent by the network device, the terminal device monitors, based on the N time domain resources, the paging message sent by the network device.

It should be noted that a possible explanation to that the terminal device monitors the paging message based on the N time domain resources is that the terminal device monitors, on the N time domain resources, whether an identifier (for example, a P-RNTI) used for paging exists on a PDCCH. If the terminal device detects the identifier used for paging, on the PDCCH on a time domain resource included in the N time domain resources, the terminal device determines that a corresponding PDSCH carries the paging message, and the terminal device receives the paging message on the corresponding PDSCH. It should be noted that, in this embodiment of this application, to reduce power consumption of the terminal device, in one paging cycle, the terminal device monitors the paging message in only one paging occasion. The paging cycle may be a DRX cycle or a predefined cycle. This is not limited.

In this embodiment of this application, the terminal device can monitor the paging message based on the N time domain resources in the paging occasion. Therefore, compared with the prior art, this embodiment improves flexibility of monitoring the paging message by the terminal device.

In this embodiment of this application, an optional manner of indicating the N time domain resources is as follows. The paging occasion configuration information includes at least one of the following information:

a quantity of the time domain resources used to monitor the paging message, duration of each time domain resource used to monitor the paging message, duration of an interval between every two adjacent time domain resources used to monitor the paging message, and time domain position offset information, where the time domain position offset information indicates an offset of a first time domain position relative to a second time domain position, the first time domain position is a start position of a time domain resource that is used to monitor the paging message and that ranks first in a time sequence, and the second time domain position is any time domain position in a synchronization signal block, or the second time domain position is a start time domain position of a paging frame.

For example, when the duration of each time domain resource used to monitor the paging message is the same as the duration of the interval between two adjacent time domain resources used to monitor the paging message, the time domain resources used to monitor the paging message and the interval between two adjacent time domain resources used to monitor the paging message may be predefined on the terminal device and the network device in a protocol. In this case, the paging occasion configuration information may include the quantity of the time domain resources used to monitor the paging message and the time domain position offset information, to indicate the N time domain resources in the paging occasion that are used to monitor the paging message

For another example, the quantity of the time domain resources used to monitor the paging message is predefined in the terminal device and the network device. If the duration of each time domain resource used to monitor the paging message, the duration of the interval between every two adjacent time domain resources used to monitor the paging message, and the time domain position offset information are flexibly set, the paging occasion configuration information may include the duration of each time domain resource used to monitor the paging message, the duration of the interval between every two adjacent time domain resources, and the time domain position offset information, to indicate the N time domain resources in the paging occasion that are used to monitor the paging message.

For another example, if the first time domain position is predefined in the terminal device and the network device, the paging occasion configuration information may include the quantity of the time domain resources used to monitor the paging message, the duration of each time domain resource used to monitor the paging message, and the duration of the interval between every two adjacent time domain resources used to monitor the paging message, to indicate the N time domain resources in the paging occasion that are used to monitor the paging message.

In addition, the paging occasion configuration information may alternatively include the quantity of the time domain resources used to monitor the paging message, the duration of each time domain resource used to monitor the paging message, the duration of the interval between every two adjacent time domain resources used to monitor the paging message, and the time domain position offset information, to indicate the N time domain resources in the paging occasion that are used to monitor the paging message. For example, the paging occasion configuration information indicates the time domain resource 1, the time domain resource 2, and the time domain resource 3 shown in FIG. 3a. The time domain resource 1 and the time domain resource 2 are two adjacent time domain resources used to monitor the paging message, the time domain resource 2 and the time domain resource 3 are two adjacent time domain resources used to monitor the paging message, and the time domain resource 1 and the time domain resource 3 are two non-adjacent time domain resources used to monitor the paging message. In addition, in the time domain resource 1, the time domain resource 2, and the time domain resource 3, a time domain resource ranking first in a time sequence is the time domain resource 1, a time domain resource ranking second is the time domain resource 2, and a time domain resource ranking third is the time domain resource 3.

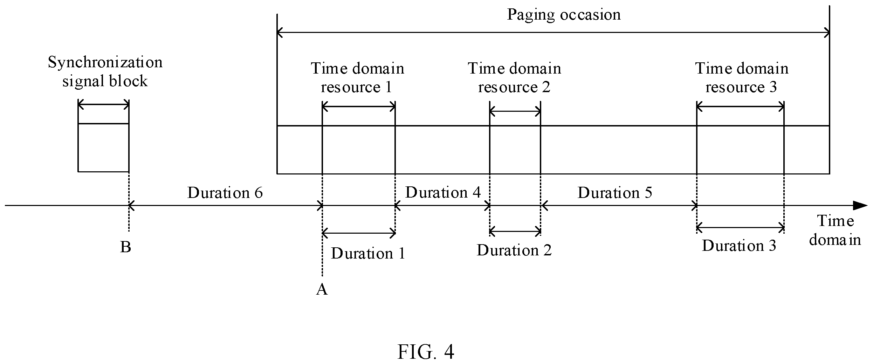

As shown in FIG. 4, duration of the time domain resource 1 is duration 1, duration of the time domain resource 2 is duration 2, duration of the time domain resource 3 is duration 3, duration of an interval between the time domain resource 1 and the time domain resource 2 is duration 4, duration of an interval between the time domain resource 2 and the time domain resource 3 is duration 5, the offset of the first time domain position relative to the second time domain position is duration 6, the first time domain position is a start time domain position A of the time domain resource 1, and the second time domain position is an end time domain position B of the synchronization signal block.

In this case, optionally, the paging occasion configuration information includes the following information: the duration of the time domain resource 1 being the duration 1, the duration of the time domain resource 2 being the duration 2, the duration of the time domain resource 3 being the duration 3, the duration of the interval between the time domain resource 1 and the time domain resource 2 being the duration 4, the duration of the interval between the time domain resource 2 and the time domain resource 3 being the duration 5, and the offset of the first time domain position relative to the second time domain position being the duration 6.

It should be noted that the second time domain position may alternatively be a start time domain position of the synchronization signal block or another time domain position in the synchronization signal block. This is not limited in this embodiment of this application. For example, the start time domain position of the synchronization signal block may be a time at which sending of the synchronization signal block actually starts, and the end time domain position of the synchronization signal block is a time at which sending of the synchronization signal block actually ends.

In addition, the second time domain position may alternatively be the start time domain position of the paging frame. Alternatively, the second time domain position is a predefined time domain position in the paging frame, or the like. This is not limited.

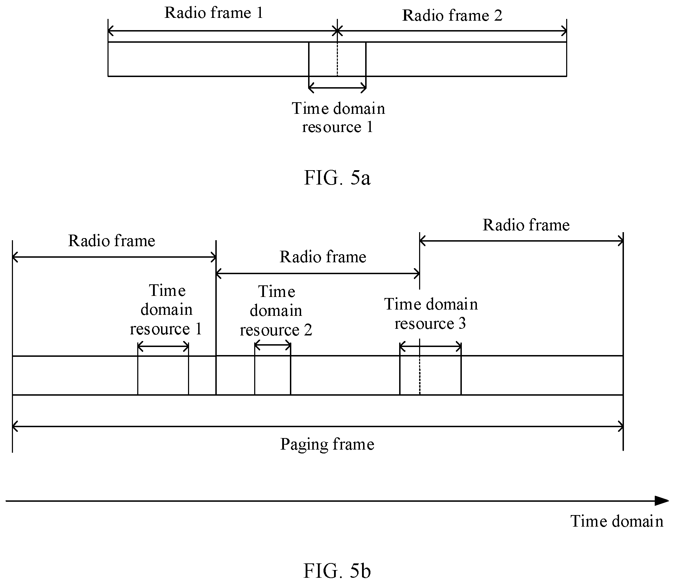

It should be noted that, in this embodiment of this application, the paging frame may be a radio frame including the time domain resource that ranks first in a time sequence in the N time domain resources used to monitor the paging message. The time domain resource 1, the time domain resource 2, and the time domain resource 3 shown in FIG. 3a are used as an example. A radio frame including the time domain resource 1 is the paging frame. It should be noted that in this embodiment of this application, the radio frame including the time domain resource 1 may be a radio frame including a part or all of the time domain resource 1. This is not limited in this embodiment of this application. For example, as shown in FIG. 5a, a part of the time domain resource 1 is in a radio frame 1, and the other part is in a radio frame 2. In this embodiment of this application, the paging frame is the radio frame 1, or may be the radio frame 2. Usually, the time domain resource 1 is located in one radio frame. The radio frame in this embodiment of this application may be a radio frame in LTE, or may be a newly defined frame structure. This is not limited. In addition, the paging frame in this embodiment of this application may alternatively be K consecutive radio frames including the N time domain resources. N is configured by the network device for the terminal device, or K is calculated by the terminal device based on a length of the paging occasion. For example, K=Total length of the N time domain resources/L, where L is a positive integer, and L is a predefined value, or L is a value configured by the network device for the terminal device. For example, the time domain resource 1, the time domain resource 2, and the time domain resource 3 shown in FIG. 3a occupy three consecutive radio frames, and the three consecutive radio frames are the paging frame.

In addition, in this embodiment of this application, the time domain position offset information may directly indicate the offset of the first time domain position relative to the second time domain position, or may indirectly indicate the offset of the first time domain position relative to the second time domain position.

A manner of indirectly indicating the offset of the first time domain position relative to the second time domain position is as follows:

The time domain position offset information includes first offset information and second offset information. The first offset information indicates an offset of a start position of the paging occasion relative to the second time domain position. The second offset information indicates an offset of the first time domain position relative to the start position of the paging occasion.

For example, the paging occasion configuration information indicates the time domain resource 1, the time domain resource 2, and the time domain resource 3 shown in FIG. 3a. The time domain resource 1 and the time domain resource 2 are two adjacent time domain resources used to monitor the paging message, the time domain resource 2 and the time domain resource 3 are two adjacent time domain resources used to monitor the paging message, and the time domain resource 1 and the time domain resource 3 are two non-adjacent time domain resources used to monitor the paging message. In addition, in the time domain resource 1, the time domain resource 2, and the time domain resource 3, a time domain resource ranking first in a time sequence is the time domain resource 1.

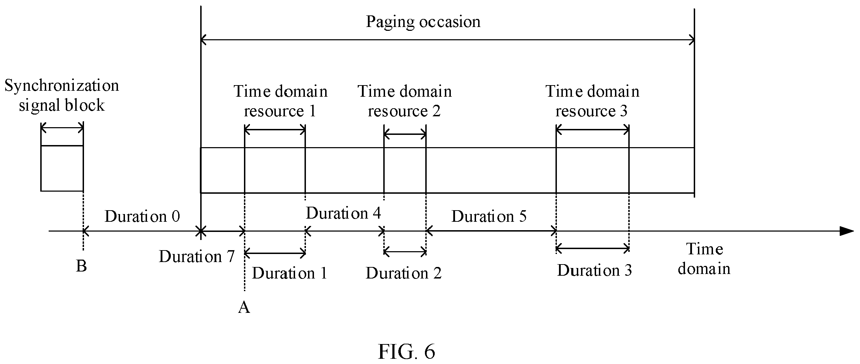

As shown in FIG. 6, duration of the time domain resource 1 is duration 1, duration of the time domain resource 2 is duration 2, duration of the time domain resource 3 is duration 3, duration of an interval between the time domain resource 1 and the time domain resource 2 is duration 4, duration of an interval between the time domain resource 2 and the time domain resource 3 is duration 5, the offset of the first time domain position relative to the second time domain position is duration 6, the first time domain position is a start time domain position A of the time domain resource 1, the second time domain position is an end time domain position B of the synchronization signal block, the offset of the first time domain position relative to the start position of the paging occasion is duration 7, and the offset of the start position of the paging occasion relative to the second time domain position is duration 0.

In this case, optionally, the paging occasion configuration information includes the following information: the duration of the time domain resource 1 being the duration 1, the duration of the time domain resource 2 being the duration 2, the duration of the time domain resource 3 being the duration 3, the duration of the interval between the time domain resource 1 and the time domain resource 2 being the duration 4, the duration of the interval between the time domain resource 2 and the time domain resource 3 being the duration 5, the offset of the first time domain position relative to the start position of the paging occasion being the duration 7, and the offset of the start position of the paging occasion relative to the second time domain position being the duration 0.

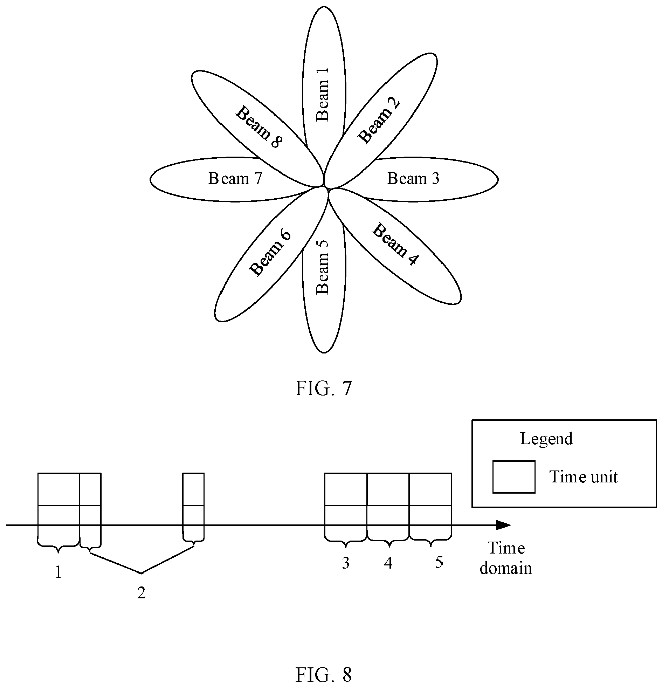

It should be understood that, because a spectrum with a relatively high frequency is used for communication in 5G, a beam sending technology is introduced to meet a signal coverage requirement. In this case, the network device may communicate with the terminal device by using a plurality of beams. Generally, beam directions of the beams are different. It is assumed that the network device and the terminal device may communicate with each other by using a beam 1, a beam 2, a beam 3, a beam 4, a beam 5, a beam 6, a beam 7, and a beam 8 shown in FIG. 7. In this case, the terminal device may monitor the paging message on each of the beam 1, the beam 2, the beam 3, the beam 4, the beam 5, the beam 6, the beam 7, and the beam 8. To enable the terminal device to determine, when monitoring the paging message on the N time domain resources, a beam on which the paging message is monitored, in a possible embodiment, the terminal device determines a quantity M of beams used for communication with the network device, where M is a positive integer greater than or equal to 1. Then, the terminal device divides the N time domain resources into M time units. Each of the M beams corresponds to one of the M time units, and the M beams correspond to different time units. Finally, the terminal device monitors, in a time unit corresponding to each of at least one beam in the M beams, the paging message sent by the network device.

The time domain resource 1, the time domain resource 2, and the time domain resource 3 shown in FIG. 3a are used as an example. If the duration of the time domain resource 1 is 1.5 ms, the duration of the time domain resource 2 is 0.5 ms, the duration of the time domain resource 3 is 3 ms, and there are five beams used for communication between the terminal device and the network device: the beam 2, the beam 3, the beam 5, the beam 7, and the beam 8 in the beam 1, the beam 2, the beam 3, the beam 4, the beam 5, the beam 6, the beam 7, and the beam 8, the time domain resource 1, the time domain resource 2, and the time domain resource 3 may be divided into five time units with equal duration, as shown in FIG. 8. A correspondence between a time unit and a beam may be agreed on in advance between the terminal device and the network device. For example, the correspondence between a time unit and a beam may be: The beams sequentially correspond to the time units in a time sequence in which the network device sends synchronization signals by using the beams. For example, the sequence in which the network device sends the synchronization signals by using the beams is: the beam 2, the beam 3, the beam 5, the beam 7, and the beam 8. In this case, the beam 2 corresponds to a time unit 1, the beam 3 corresponds to a time unit 2, the beam 5 corresponds to a time unit 3, the beam 7 corresponds to a time unit 4, and the beam 8 corresponds to a time unit 5. In this case, the terminal device determines that the first beam used to send the SSB corresponds to the time unit 1, the second beam used to send the SSB corresponds to the time unit 2, the third beam used to send the SSB corresponds to the time unit 3, the fourth beam used to send the SSB corresponds to the time unit 4, and the fifth beam used to send the SSB corresponds to the time unit 5. The first beam used to send the SSB is the beam 2, the second beam used to send the SSB is the beam 3, the third beam used to send the SSB is the beam 5, the fourth beam used to send the SSB is the beam 7, and the fifth beam used to send the SSB is the beam 8.

The terminal device may monitor the paging message in at least one of the time unit 1, the time unit 2, the time unit 3, the time unit 4, and the time unit 5. For example, when the terminal device monitors the paging message in the time unit 1, the terminal device performs monitoring on the first beam used to send the SSB; when the terminal device monitors the paging message in the time unit 2, the terminal device performs monitoring on the second beam used to send the SSB. Even if the terminal device does not know a specific beam index of the beam used to send the SSB, the terminal device can still determine a time unit corresponding to the beam.

Optionally, the terminal device may determine, based on signal received quality corresponding to each of the M beams, the at least one beam used to monitor the paging message.

For example, the beam 2 corresponds to the time unit 1, the beam 3 corresponds to the time unit 2, the beam 5 corresponds to the time unit 3, the beam 7 corresponds to the time unit 4, and the beam 8 corresponds to the time unit 5. If signal received quality corresponding to the beam 2 is A1, signal received quality corresponding to the beam 3 is A2, signal received quality corresponding to the beam 5 is A3, signal received quality corresponding to the beam 7 is A4, and signal received quality corresponding to the beam 8 is A5, when A1>A2>A3>A4>A5, if the first beam used to send the SSB is the beam 2, the second beam used to send the SSB is the beam 3, the third beam used to send the SSB is the beam 5, the fourth beam used to send the SSB is the beam 7, and the fifth beam used to send the SSB is the beam 8, the terminal device may monitor the paging message only on the first beam used to send the SSB, and does not need to monitor the paging message on the other beams. This helps reduce power consumption of the terminal device. In this case, the terminal device monitors the paging message only in the time unit 1, and does not need to monitor the paging message in the other time units.

In addition, the terminal device may alternatively monitor the paging message on beams whose received signal quality ranks top n, and a value of n is a positive integer greater than or equal to 1 (for example, the value of n is 3). The value of n may be predefined, or may be determined by the network device. This is not limited. For example, the value of n is 3. In this case, the terminal device monitors the paging message on each of the first beam, the second beam, and the third beam that are used to send the SSBs. In this case, the terminal device monitors the paging message only in each of the time unit 1, the time unit 2, and the time unit 3, and does not need to monitor the paging message in the other time units.

In this embodiment of this application, a possible implementation in which the terminal device determines the quantity M of beams used for communication with the network device is as follows:

The terminal device determines, based on a quantity of beams actually used by the network device to send synchronization signal blocks to the terminal device, the quantity M of beams used for communication with the network device.

For example, a maximum quantity of SSBs sent by the network device in one SSB periodicity is 64, and the 64 SSBs respectively correspond to beam indexes 0 to 63. However, for one terminal device, SSBs may be sent on several beams of the 64 beams by the network device. If the network device sends SSBs to the terminal device on beams whose beam indexes are 2, 3, 5, 7, and 8, the terminal device determines that the quantity of beams actually used by the network device to send the SSBs to the terminal device is 5, and determines that the quantity of beams used for communication with the network device is 5.

Another possible implementation in which the terminal device determines the quantity M of beams used for communication with the network device is as follows:

The terminal device receives beam configuration information sent by the network device, where the beam configuration information indicates the quantity of beams used for communication with the network device, or the beam configuration information indicates duration for monitoring the paging message on one beam. Then, the terminal device determines, based on the beam configuration information, the quantity M of beams used for communication with the network device.

For example, if the beam configuration information indicates that the quantity of beams used for communication with the network device is M, the terminal device determines that the quantity of beams used for communication with the network device is M. For another example, for simplification of the implementation, it is predefined that the duration for monitoring the paging message on each beam is the same. If the beam configuration information indicates that duration for monitoring the paging message on one beam is L, and if the duration of the N time domain resources is K, the terminal device determines that the quantity M of beams used for communication with the network device is K/L.

In addition, in this embodiment of this application, when the duration for monitoring the paging message on the beams is different, the network device needs to indicate the duration for monitoring the paging message on each beam.

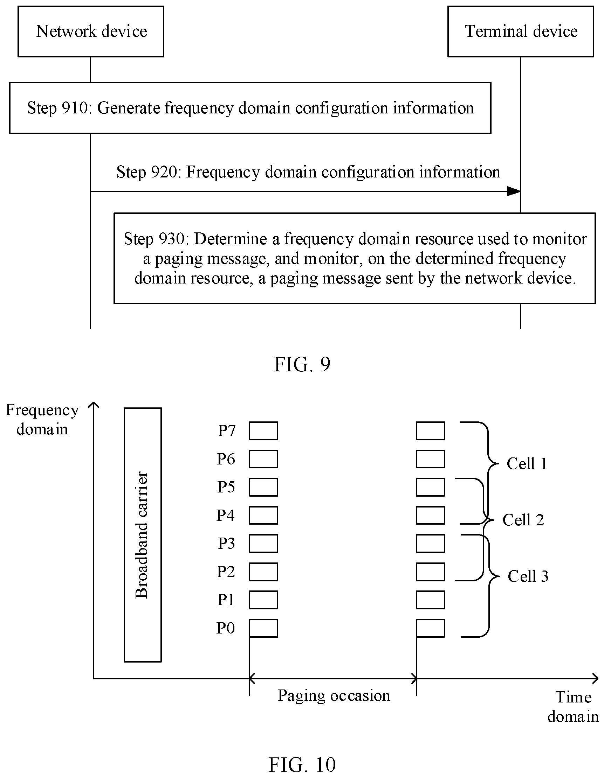

FIG. 9 is a schematic flowchart of another paging message monitoring method according to an embodiment of this application. Specifically, the following steps are included.

Step 910: A network device generates frequency domain configuration information. The frequency domain configuration information is used to indicate Q frequency domain resources, and Q is a positive integer greater than or equal to 1.

It should be understood that the frequency domain resource in this embodiment of this application may be a bandwidth part (bandwidth part, BWP), a physical resource block (physical resource block, PRB), or the like. This is not limited. The Q frequency domain resources in this embodiment of this application may be consecutive frequency domain resources, or may be nonconsecutive frequency domain resources. This is not limited.

The Q frequency domain resources are frequency domain resources that are configured by the network device and that are used to monitor a paging message. Different cells may share a same frequency domain resource. For example, a frequency domain resource 1 is shared by a cell 1 and a cell 2. In this case, both a terminal device in the cell 1 and a terminal device in the cell 2 can detect, on the frequency domain resource 1, the paging message sent by the network device. In this case, a PCI used by the frequency domain resource 1 needs to be notified to the terminal devices in the cell 1 and the cell 2. Usually, the terminal devices in the cell 1 and the cell 2 can monitor the paging message on the frequency domain resource 1 by using the PCI.

Step 920: The network device sends the frequency domain configuration information to the terminal device.

Step 930: After receiving the frequency domain configuration information sent by the network device, the terminal device determines, based on the Q frequency domain resources, a frequency domain resource used to monitor the paging message, and monitors, in a paging occasion, the paging message on the determined frequency domain resource used to monitor the paging message

It should be further noted that, the terminal device monitoring the paging message based on the determined frequency domain resource means that the terminal device monitors whether an identifier (for example, a P-RNTI) used for paging exists on a PDCCH on the determined frequency domain resource. If the terminal device detects, on the PDCCH, the identifier used for paging, the terminal device reads the PDCCH, determines, based on content of the PDCCH, whether a corresponding PDSCH carries the paging message, and receives the paging message on the corresponding PDSCH if the PDSCH carries the paging message. The frequency domain resource that is determined by the terminal device and that is used to monitor the paging message may be one of the Q frequency domain resources, or may be an initial frequency domain resource. The initial frequency domain resource is a frequency domain resource used by the network device to send system information to the terminal device.

For example, the frequency domain resource used to monitor the paging message may be one of the Q frequency domain resources configured by the network device, or may be the initial frequency domain resource. Optionally, the network device may configure the frequency domain resource used to monitor the paging message, based on a quantity of frequency domain resources on which the network device needs to send the paging message and the frequency domain resource used to send the system information, to generate the frequency domain configuration information. For example, the network device may send a paging message for 60 terminal devices on one frequency domain resource in the paging occasion. If the network device needs to send paging information for 240 terminal devices in the paging occasion, four frequency domain resources are needed. Therefore, in addition to the initial frequency domain resource, the network device further needs to configure three additional frequency domain resources. Therefore, the frequency domain configuration information generated by the network device needs to indicate three frequency domain resources. It should be noted that the paging occasion includes a time domain resource on which the terminal device monitors the paging message. A configuration manner of the paging occasion may be the configuration manner of the paging occasion in the paging message monitoring method shown in FIG. 2, or may be a configuration manner of the paging occasion in long term evolution (long term evolution, LTE).

For another example, the frequency domain resource used to monitor the paging message is one of the Q frequency domain resources configured by the network device. For example, the network device may send a paging message for 60 terminal devices on one frequency domain resource in the paging occasion. If the network device needs to send paging information for 240 terminal devices in the paging occasion, four frequency domain resources are needed. Therefore, the frequency domain configuration information generated by the network device needs to indicate four frequency domain resources.

In this embodiment of this application, the paging message may be monitored by configuring the frequency domain resource. This improves flexibility of monitoring the paging message by the terminal device. In addition, the terminal device monitors the paging message only on the determined resource used to monitor the paging message. This helps reduce power consumption of the terminal device.

In addition, the frequency domain resource used to monitor the paging message in this embodiment of this application may be shared by different cells, or may be used by only one cell. This is not limited.

For example, a value of M is 8. For example, as shown in FIG. 10, the frequency domain resources indicated by the frequency domain configuration information are P0, P1, P2, P3, P4, P5, P6, and P7. P4, P5, P6, and P7 correspond to a cell (cell) 1, P2, P3, P4, and P5 correspond to a cell 2, and P0, P1, P2, and P3 correspond to a cell 3. For the cell 1, the terminal device sends an SSB 1 on P4, P5, P6, and P7. For the cell 2, the terminal device sends an SSB 2 on P2, P3, P4, and P5. For the cell 3, the terminal device sends an SSB 3 on P0, P1, P2, and P3.

It can be learned from FIG. 10 that P4 and P5 are shared by the cell 1 and the cell 2. When the terminal device is in the cell 1 or the cell 2, the terminal device can monitor, on P4 and P5, whether there is the paging message. P2 and P3 are shared by the cell 2 and the cell 3. When the terminal device is in the cell 2 or the cell 3, the terminal device can monitor, on P2 and P3, whether there is the paging message.

An optional manner of determining the frequency domain resource used to monitor the paging message is as follows:

The terminal device determines, based on an identifier of the terminal device and an index corresponding to each of the Q frequency domain resources, the frequency domain resource used to monitor the paging message. The identifier of the terminal device and an index associated with the frequency domain resource used to monitor the paging message meet a preset relationship. The index corresponding to each of the Q frequency domain resources may be notified by the network device to the terminal device by using the frequency domain configuration information. It should be noted that the frequency domain resources one-to-one correspond to indexes. To be specific, each of the Q frequency domain resources corresponds to one index, and the frequency domain resources correspond to different indexes.

For example, the preset relationship met by the index corresponding to the frequency domain resource and the identifier of the terminal device includes:

$$index = P \bmod Q$$

index is the index corresponding to the frequency domain resource used to monitor the paging message. P is a ratio of the identifier of the terminal device to a quantity of paging occasions in one paging cycle, or P is a value obtained after the identifier of the terminal device is reversed. Q is a total quantity of frequency domain resources used to send paging message identifiers (for example, P-RNTIs).

It should be noted that in this embodiment of this application, the identifier of the terminal device may be an international mobile subscriber identity (international mobile subscriber identification number, IMSI). Alternatively, the identifier of the terminal device may be a result of IMSI mod X, where X is a predefined positive integer. Alternatively, the identifier of the terminal device may be a predefined identifier used to identify the terminal device, or the like. This is not limited. In this embodiment of this application, the paging cycle may be a DRX cycle, a predefined cycle, or the like. This is not limited. The paging occasion in this embodiment of this application may be a PO in LTE, or may be N time domain resources in the paging message monitoring method shown in FIG. 2. This is not limited in this embodiment of this application either.

In addition, in this embodiment of this application, when the network device configures the corresponding indexes for the frequency domain resources, an index corresponding to a same frequency domain resource needs to be configured to be the same in different cells, to support inter-cell frequency domain resource sharing, so as to ensure that terminal devices that camp on different cells and belong to a same paging group (where terminal devices identified by terminal device identifiers that meet a same preset relationship with an index corresponding to the frequency domain resource are in a same paging group) can perform monitoring on a same frequency domain resource. For example, if a frequency domain resource R1 is configured for the terminal device in the cell 1 by using system information, and an index corresponding to the frequency domain resource R1 is 1, when the frequency domain resource R1 is also configured for the terminal device in the cell 2 by using system information, for the terminal device in the cell 2, the index corresponding to the frequency domain resource R1 should also be 1. In this way, it can be ensured that the terminal device in the cell 1 and the terminal device in the cell 2 that belong to a same paging group can monitor the paging message on the frequency domain resource R1.

Optionally, when frequency domain resources used to monitor the paging message further include the initial frequency domain resource, the terminal device determines, based on the index corresponding to each of the Q frequency domain resources, an index corresponding to the initial frequency domain resource, and the identifier of the terminal device, the frequency domain resources used to monitor the paging message. The identifier of the terminal device and an index associated with the frequency domain resource used to monitor the paging message meet a preset relationship.

For example, the preset relationship met by the index corresponding to the frequency domain resource and the identifier of the terminal device includes:

$$index = P \bmod (Q+1)$$

index is the index corresponding to the frequency domain resource used to monitor the paging message. P is a ratio of the identifier of the terminal device to a quantity of paging occasions in one paging cycle, or P is a value obtained after the identifier of the terminal device is reversed. (Q+1) is a total quantity of frequency domain resources used to send paging message identifiers (for example, P-RNTIs).

It should be noted that the network device may allocate the corresponding index to the initial frequency domain resource, so that the terminal device can determine, based on the index corresponding to the initial frequency domain resource, whether the paging message needs to be monitored on the initial frequency domain resource. A value of the index is different from that of the index of each of the Q frequency domain resources.

In this embodiment of this application, the indexes corresponding to the frequency domain resources may be implicitly configured. For example, the index corresponding to each of the Q frequency domain resources is determined based on a position of each frequency domain resource in the Q frequency domain resources. For example, the index corresponding to each of the Q frequency domain resources is used to indicate a position of the frequency domain resource in the Q frequency domain resources. For another example, the index corresponding to the initial frequency domain resource may be set to 0 by default, and the network device does not need to indicate the index to the terminal device.

The frequency domain resources shown in FIG. 10 are used as an example. If an index corresponding to P1 and an identifier of a terminal device 1 meet the preset relationship, the terminal device 1 monitors the paging message on P1 in the paging occasion. If an index corresponding to P3 and an identifier of a terminal device 2 meet the preset relationship, the terminal device 2 monitors the paging message on P3 in the paging occasion.

Optionally, in this embodiment of this application, the frequency domain configuration information may include a carrier of each of the Q frequency domain resources and a bandwidth of each of the Q frequency domain resources, to indicate the Q frequency domain resources.

In addition, optionally, when the network device does not indicate the bandwidth of the frequency domain resource to the terminal device, the bandwidth of the frequency domain resource may be the same as a bandwidth of the initial frequency domain resource by default. When the network device does not indicate the carrier and bandwidth of the frequency domain resource to the terminal device, the Q frequency domain resources are consecutively arranged by default, and the bandwidth of the frequency domain resource is the same as the bandwidth of the initial frequency domain resource by default. For example, the terminal device may calculate the position of each of the Q frequency domain resources based on a frequency domain position of the initial frequency domain resource. For example, Center position of an $X^{th}$ frequency domain resource = Frequency domain center position of the initial frequency domain resource + X*Bandwidth of the initial frequency domain resource.

In addition, optionally, the frequency domain configuration information further includes at least one of a control resource set of each of the Q frequency domain resources, search space corresponding to each of the Q frequency domain resources, and a correspondence between each of the Q frequency domain resources and a physical cell identifier (physical cell identifier, PCI), to further enable the terminal device to monitor the paging message more accurately.

The terminal device monitors the paging message on at least one frequency domain resource based on at least one of a control resource set of the frequency domain resource, search space of the frequency domain resource, and a PCI corresponding to the frequency domain resource.

The control resource set (CORRESET) is used to indicate a time-frequency resource on which the terminal device is to perform PDCCH detection, and the search space is used to indicate information such as an aggregation level and a PDCCH format that are to be used by the terminal device to perform PDCCH detection.

For example, after determining a carrier and a bandwidth of the $X^{th}$ frequency domain resource, the terminal device determines, based on the carrier and the bandwidth, a BWP for receiving the frequency domain resource. The terminal device determines, based on the BWP and a configuration of the control resource set (CORRESET), a time-frequency domain position of a PDCCH that needs to be monitored. Then, the terminal device performs PDCCH searching by using the aggregation level that is indicated by the search space and that is used for performing PDCCH detection by the terminal device. If no search space is configured, the terminal device may perform PDCCH searching by using a default aggregation level. After detecting a PDCCH carrying the P-RNTI, the terminal device reads a PDSCH based on information that is indicated by the PDCCH and that is about the PDSCH, reads the paging message from the PDSCH, and determines, based on the paging message, whether the terminal device is paged. When reading the PDSCH, the terminal device needs to perform descrambling by using a configured PCI associated with the frequency domain resource for paging. If no PDCCH carrying the P-RNTI is detected, it is considered that there is no paging currently, and monitoring is performed again in a next paging cycle.

FIG. 10 is used as an example. If the terminal device monitors the paging message on P5, because P5 is a frequency domain resource shared by the cell 1 and the cell 2, a PCI used by the terminal device to monitor the paging message on P5 may be a PCI of the cell 1 or a PCI of the cell 2. For example, if the frequency domain configuration information includes the PCI of the cell 1, the PCI used by the terminal device to monitor the paging message on P5 is the PCI of the cell 1. For another example, if the frequency domain configuration information includes the PCI of the cell 2, the PCI used by the terminal device to monitor the paging message on P5 is the PCI of the cell 2.

Various implementations of this application may be randomly combined to achieve different technical effects.

In the foregoing embodiments provided in this application, the methods provided in the embodiments of this application are separately described from a perspective of interaction between the network device and the terminal device. To implement functions in the foregoing methods provided in the embodiments of this application, the base station and the terminal device each may include a hardware structure and/or a software module, and implement the foregoing functions in a form of the hardware structure, the software module, or a combination of the hardware structure and the software module. Whether a function of the functions is performed by using the hardware structure, the software module, or the combination of the hardware structure and the software module depends on a specific application and a design constraint condition of the technical solution.

Based on a same concept, a communication apparatus configured to perform the method performed by the terminal device in the paging message monitoring method shown in FIG. 2 may be a terminal device or hardware implementing a similar function. The method includes:

The communication apparatus receives paging occasion configuration information sent by a network device, and monitors, based on N time domain resources, a paging message sent by the network device. The paging occasion configuration information indicates the N time domain resources in a paging occasion, and N is a positive integer greater than or equal to 1.

Optionally, the paging occasion configuration information includes at least one of the following information: a quantity of the time domain resources, duration of each time domain resource, duration of an interval between every two adjacent time domain resources, and time domain position offset information. The time domain position offset information indicates an offset of a first time domain position relative to a second time domain position, the first time domain position is a start position of a time domain resource ranking first in a time sequence, and the second time domain position is any time domain position in a synchronization signal block, or the second time domain position is a start time domain position of a paging frame.

Optionally, the time domain position offset information includes first offset information and second offset information. The first offset information indicates an offset of a start position of the paging occasion relative to the second time domain position; and the second offset information indicates an offset of the first time domain position relative to the start position of the paging occasion. Optionally, the communication apparatus determines a quantity M of beams used for communication with the network device, where M is a positive integer greater than or equal to 1; the communication apparatus divides the N time domain resources into M time units, where each of the M beams corresponds to one of the M time units, and the M beams correspond to different time units; and then, the communication apparatus monitors, in a time unit corresponding to each of at least one beam in the M beams, the paging message sent by the network device.

Optionally, the communication apparatus determines, based on a quantity of beams actually used by the network device to send synchronization signal blocks to the communication apparatus, the quantity M of beams used for communication with the network device.

Optionally, the communication apparatus receives beam configuration information sent by the network device, where the beam configuration information indicates the quantity of beams used for communication with the network device, or the beam configuration information indicates duration for monitoring the paging message on one beam; and the communication apparatus determines, based on the beam configuration information, the quantity M of beams used for communication with the network device.

Optionally, the communication apparatus determines the at least one beam in the M beams based on signal received quality corresponding to each of the M beams.

Based on a same concept, a communication apparatus configured to perform the method performed by the network device in the paging message monitoring method shown in FIG. 2 may be a network device or hardware implementing a similar function. The method includes:

The communication apparatus generates paging occasion configuration information, and sends the paging occasion configuration information to a terminal device, where the paging occasion configuration information indicates N time domain resources. The paging occasion configuration information indicates the N time domain resources in a paging occasion, and N is a positive integer greater than or equal to 1.

Optionally, the paging occasion configuration information includes at least one of the following information: a quantity of the time domain resources, duration of each time domain resource, duration of an interval between every two adj acent time domain resources, and time domain position offset information. The time domain position offset information indicates an offset of a first time domain position relative to a second time domain position, the first time domain position is a start position of a time domain resource ranking first in a time sequence, and the second time domain position is any time domain position in a synchronization signal block, or the second time domain position is a start time domain position of a paging frame.

Optionally, the time domain position offset information includes first offset information and second offset information. The first offset information indicates an offset of a start position of the paging occasion relative to the second time domain position; and the second offset information indicates an offset of the first time domain position relative to the start position of the paging occasion. Optionally, the communication apparatus sends beam configuration information to the terminal device, where the beam configuration information indicates a quantity of beams used for communication with the communication apparatus, or the beam configuration information indicates duration for monitoring a paging message on one beam.

Based on a same concept, a communication apparatus configured to perform the method performed by the terminal device in the paging message monitoring method shown in FIG. 9 may be a terminal device or hardware implementing a similar function. The method includes:

The communication apparatus receives frequency domain configuration information sent by a network device, where the frequency domain configuration information indicates Q frequency domain resources, and Q is a positive integer greater than or equal to 1; and

the communication apparatus determines, based on the Q frequency domain resources, a frequency domain resource used to monitor a paging message; and monitors, on the determined frequency domain resource in a paging occasion, the paging message sent by the network device.

Optionally, the frequency domain configuration information further indicates an index corresponding to each of the Q frequency domain resources; and the communication apparatus determines, based on the indexes corresponding to the Q frequency domain resources and an identifier of the communication apparatus, the frequency domain resource used to monitor the paging message, where the identifier of the communication apparatus and an index corresponding to the frequency domain resource used to monitor the paging message meet a preset relationship.

Optionally, the identifier of the communication apparatus and the index corresponding to the frequency domain resource used to monitor the paging message meet:

$$index = P \bmod Q; \text{ or } index = P \bmod (Q+1),$$

where

index is the index corresponding to the frequency domain resource used to monitor the paging message, and P is a ratio of the identifier of the communication apparatus to a quantity of paging occasions in one paging cycle, or P is a value obtained after the identifier of the communication apparatus is reversed.

Optionally, the frequency domain configuration information includes a carrier of each of the Q frequency domain resources and a bandwidth of each of the Q frequency domain resources.

Optionally, the frequency domain configuration information further includes at least one of a control resource set of each of the Q frequency domain resources, search space corresponding to each of the Q frequency domain resources, and a correspondence between each of the Q frequency domain resources and a physical cell identifier PCI; and the communication apparatus monitors, in the paging occasion, the paging message based on the at least one of the control resource set of the frequency domain resource, the search space of the frequency domain resource, and the PCI corresponding to the frequency domain resource, on the frequency domain resource used to monitor the paging message.

Based on a same concept, a communication apparatus configured to perform the method performed by the network device in the paging message monitoring method shown in FIG. 9 may be a network device or hardware implementing a similar function. The method includes:

The communication apparatus generates frequency domain configuration information, where the frequency domain configuration information indicates Q frequency domain resources, and Q is a positive integer greater than or equal to 1; and then, the communication apparatus sends the frequency domain configuration information to a terminal device.

In a possible design, the frequency domain configuration information further indicates an index corresponding to each of the Q frequency domain resources, where an identifier of the terminal device and an index corresponding to a frequency domain resource used by the terminal device to monitor a paging message meet a preset relationship.

In a possible design, the identifier of the terminal device and the index corresponding to the frequency domain resource used by the terminal device to monitor the paging message meet:

$$\text{index=P mod Q; or index=P mod (Q+1),}$$

where

index is the index associated with the frequency domain resource used by the terminal device to monitor the paging message, and P is a ratio of the identifier of the terminal device to a quantity of paging occasions in one paging cycle, or P is a value obtained after the identifier of the terminal device is reversed.

In a possible design, the frequency domain resource configuration information includes a carrier of each of the Q frequency domain resources and a bandwidth of each of the Q frequency domain resources.

In a possible design, the frequency domain configuration information further includes at least one of a control resource set of each of the Q frequency domain resources, search space corresponding to each of the Q frequency domain resources, and a correspondence between each of the Q frequency domain resources and a physical cell identifier PCI.

Based on a same concept, an embodiment of this application provides a communication apparatus. The communication apparatus implements a function of the terminal device in the paging message monitoring method shown in FIG. 2. The communication apparatus may be a terminal, or may be hardware implementing a similar function. The communication apparatus includes:

The communication apparatus includes a transceiver unit and a processing unit. The transceiver unit is configured to receive paging occasion configuration information sent by a network device, where the paging occasion configuration information indicates N time domain resources in a paging occasion, and N is a positive integer greater than or equal to 1; and the processing unit is configured to monitor, based on the N time domain resources, a paging message sent by the network device.

Optionally, the paging occasion configuration information includes at least one of the following information: a quantity of the time domain resources, duration of each time domain resource, duration of an interval between every two adjacent time domain resources, and time domain position offset information. The time domain position offset information indicates an offset of a first time domain position relative to a second time domain position, the first time domain position is a start position of a time domain resource ranking first in a time sequence, and the second time domain position is any time domain position in a synchronization signal block, or the second time domain position is a start time domain position of a paging frame.

Optionally, the time domain position offset information includes first offset information and second offset information. The first offset information indicates an offset of a start position of the paging occasion relative to the second time domain position. The second offset information indicates an offset of the first time domain position relative to the start position of the paging occasion. Optionally, the processing unit is further configured to: determine a quantity M of beams used for communication with the network device, and divide the N time domain resources into M time units, where M is a positive integer greater than or equal to 1, each of the M beams corresponds to one of the M time units, and the M beams correspond to different time units; and then, monitor, in a time unit corresponding to each of at least one beam in the M beams, the paging message sent by the network device.

Optionally, the processing unit is configured to determine, based on a quantity of beams actually used by the network device to send synchronization signal blocks to the terminal device, the quantity M of beams used for communication with the network device.

Optionally, the transceiver unit is further configured to receive beam configuration information sent by the network device, where the beam configuration information indicates the quantity of beams used for communication with the network device, or the beam configuration information indicates duration for monitoring the paging message on one beam; and the processing unit is configured to determine, based on the beam configuration information, the quantity M of beams used for communication with the network device.

Optionally, the processing unit is further configured to determine the at least one beam in the M beams based on signal received quality corresponding to each of the M beams.

It should be understood that the communication apparatus may be configured to implement the steps performed by the terminal device in the paging message monitoring method shown in FIG. 2 in the embodiments of this application. For related features, refer to the foregoing descriptions. Details are not described herein again.

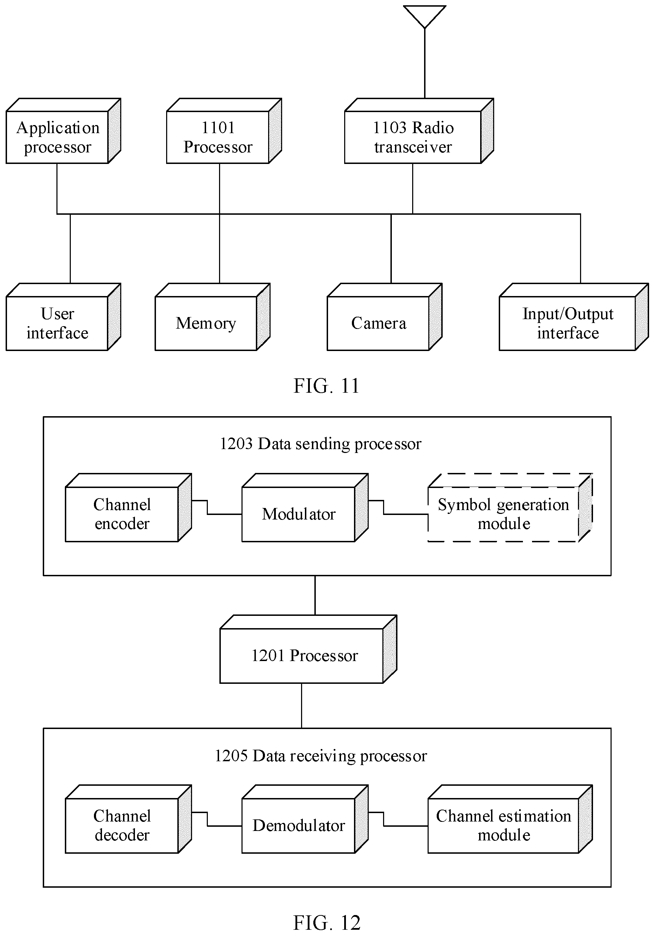

When the communication apparatus in this embodiment is a terminal device, refer to a device shown in FIG. 11. The device includes a processor 1101, an application processor, a memory, a user interface, and some other components (including a device such as a power supply that is not shown). In FIG. 11, the processor 1101 may be the processing unit, and completes a corresponding function. A radio transceiver 1103 in the figure may be the transceiver unit, and completes a corresponding function by using an antenna. It may be understood that the components shown in the figure are merely examples, and are not necessary components for completing this embodiment.

When the communication apparatus in this embodiment is a terminal device, refer to a device shown in FIG. 12. In an example, the device can implement a function similar to a function of the processor in FIG. 11. In FIG. 12, the device includes a processor, a data sending processor, and a data receiving processor. In FIG. 12, the processor 1201 may be the processing unit, and completes a corresponding function. The transceiver unit includes the data sending processor 1203 and the data receiving processor 1205 in FIG. 12. Although the figure shows a channel encoder and a channel decoder, it may be understood that these modules are merely examples, and do not constitute a limitation on this embodiment.

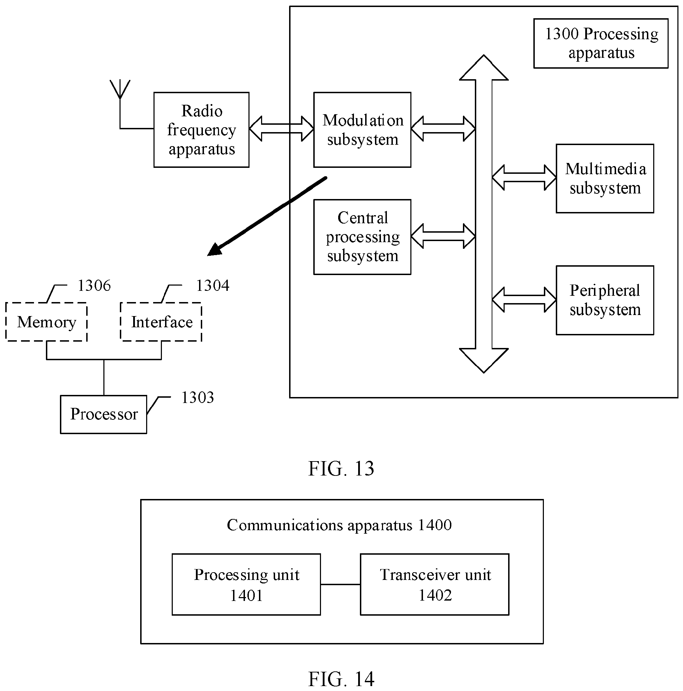

FIG. 13 shows another form of the communication apparatus in this embodiment. A processing apparatus 1300 includes modules such as a modulation subsystem, a central processing subsystem, and a peripheral subsystem. The communication apparatus in this embodiment may be used as the modulation subsystem in the processing apparatus 1300. Specifically, the modulation subsystem may include a processor 1303 and an interface 1304. The processor 1303 completes the function of the processing unit, and the interface 1304 completes the function of the transceiver unit. In another variant, the modulation subsystem includes a memory 1306, the processor 1303, and a program that is stored in the memory and is capable of being run on the processor. When the processor executes the program, the steps performed by the terminal device in the paging message monitoring method shown in

FIG. 2 are implemented. It should be noted that the memory 1306 may be a non-volatile memory, or may be a volatile memory. The memory 1306 may be located in the modulation subsystem, or may be located in the processing apparatus 1300, provided that the memory 1306 can be connected to the processor 1303.

In another form of this embodiment, a computer-readable storage medium is provided. The computer-readable storage medium stores instruction(s); when the instruction(s) is/are executed, the paging message monitoring method in the embodiments of this application is implemented.

Based on a same concept, an embodiment of this application provides a communication apparatus. The communication apparatus implements a function of the network device in the paging message monitoring method shown in FIG. 2. The communication apparatus may be a network device, or may be hardware implementing a similar function. As shown in FIG. 14, the communication apparatus 1400 in this embodiment of this application includes a processing unit 1401 and a transceiver unit 1402. The processing unit 1401 is configured to generate paging occasion configuration information, where the paging occasion configuration information indicates N time domain resources in a paging occasion, and N is a positive integer greater than or equal to 1; and the transceiver unit 1402 is configured to send the paging occasion configuration information to a terminal device, where the paging occasion configuration information indicates the N time domain resources.

Optionally, the paging occasion configuration information includes at least one of the following information: a quantity of the time domain resources, duration of each time domain resource, duration of an interval between every two adj acent time domain resources, and time domain position offset information. The time domain position offset information indicates an offset of a first time domain position relative to a second time domain position, the first time domain position is a start position of a time domain resource ranking first in a time sequence, and the second time domain position is any time domain position in a synchronization signal block, or the second time domain position is a start time domain position of a paging frame.

Optionally, the time domain position offset information includes first offset information and second offset information. The first offset information indicates an offset of a start position of the paging occasion relative to the second time domain position. The second offset information indicates an offset of the first time domain position relative to the start position of the paging occasion. Optionally, the transceiver unit 1402 is further configured to send beam configuration information to the terminal device, where the beam configuration information indicates a quantity of beams used for communication with the network device, or the beam configuration information indicates duration for monitoring a paging message on one beam.

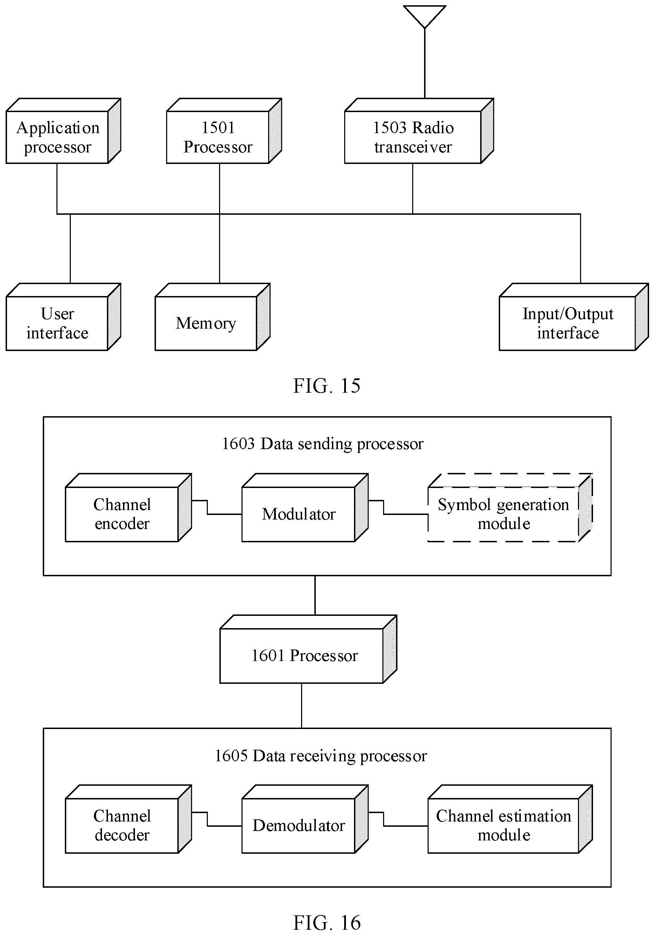

When the communication apparatus in this embodiment is a network device, refer to a device shown in FIG. 15. The device includes a processor 1501, an application processor, a memory, a user interface, and some other components (including a device such as a power supply that is not shown). In FIG. 15, the processor 1501 may be the processing unit, and completes a corresponding function. A radio transceiver 1503 in the figure may be the transceiver unit, and completes a corresponding function by using an antenna. It may be understood that the components shown in the figure are merely examples, and are not necessary components for completing this embodiment.

When the communication apparatus in this embodiment is a network device, refer to a device shown in FIG. 16. In an example, the device can implement a function similar to a function of the processor in FIG. 15. In FIG. 16, the device includes a processor, a data sending processor, and a data receiving processor. In FIG. 16, the processor 1601 may be the processing unit, and completes a corresponding function. The data sending processor 1603 and the data receiving processor 1605 in FIG. 16 may be the transceiver unit. Although the figure shows a channel encoder and a channel decoder, it may be understood that these modules are merely examples, and do not constitute a limitation on this embodiment.

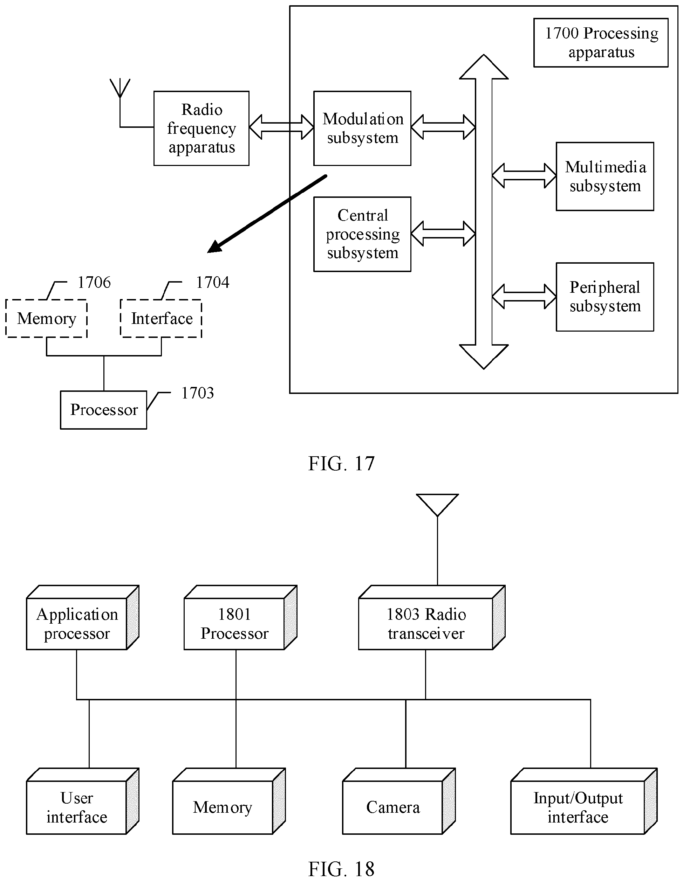

FIG. 17 shows another form of the communication apparatus in this embodiment. A processing apparatus 1700 includes modules such as a modulation subsystem, a central processing subsystem, and a peripheral subsystem. The communication apparatus in this embodiment may be used as the modulation subsystem in the processing apparatus 1700. Specifically, the modulation subsystem may include a processor 1703 and an interface 1704. The processor 1703 completes the function of the processing unit, and the interface 1704 completes the function of the transceiver unit. In another variant, the modulation subsystem includes a memory 1706, the processor 1703, and a program that is stored in the memory and is capable of being run on the processor. When the processor executes the program, the paging message monitoring method shown in FIG. 2 is implemented. It should be noted that the memory 1706 may be a non-volatile memory, or may be a volatile memory. The memory 1706 may be located in the modulation subsystem, or may be located in the processing apparatus 1700, provided that the memory 1706 can be connected to the processor 1703.

In another form of this embodiment, a computer-readable storage medium is provided. The computer-readable storage medium stores instruction(s); when the instruction(s) is/are executed, the steps performed by the network device in the paging message monitoring method shown in FIG. 2 are implemented.

Based on a same concept, an embodiment of this application provides a communication apparatus. The communication apparatus implements a function of the terminal device in the paging message monitoring method shown in FIG. 9. The communication apparatus may be a terminal, or may be hardware implementing a similar function. The communication apparatus includes a processing unit and a transceiver unit. The transceiver unit is configured to receive frequency domain configuration information sent by a network device, where the frequency domain configuration information indicates Q frequency domain resources, and Q is a positive integer greater than or equal to 1; and the processing unit is configured to: determine, based on the Q frequency domain resources, a frequency domain resource used to monitor a paging message; and monitor, on the determined frequency domain resource in a paging occasion, the paging message sent by the network device.

Optionally, the frequency domain configuration information further indicates an index corresponding to each of the Q frequency domain resources; and the processing unit is configured to determine, based on the indexes corresponding to the Q frequency domain resources and an identifier of the terminal device, the frequency domain resource used to monitor the paging message, where the identifier of the terminal device and an index corresponding to the frequency domain resource used to monitor the paging message meet a preset relationship.

Optionally, the identifier of the terminal device and the index corresponding to the frequency domain resource used to monitor the paging message meet:

$$\text{index}=P \bmod Q; \text{ or index}=P \bmod (Q+1),$$

where

index is the index corresponding to the frequency domain resource used to monitor the paging message, and P is a ratio of the identifier of the terminal device to a quantity of paging occasions in one paging cycle, or P is a value obtained after the identifier of the terminal device is reversed.

Optionally, the frequency domain configuration information includes a carrier of each of the Q frequency domain resources and a bandwidth of each of the Q frequency domain resources.

Optionally, the frequency domain configuration information further includes at least one of a control resource set of each of the Q frequency domain resources, search space corresponding to each of the Q frequency domain resources, and a correspondence between each of the Q frequency domain resources and a physical cell identifier PCI; and the processing unit is configured to monitor, in the paging occasion, the paging message based on the at least one of the control resource set of the frequency domain resource, the search space of the frequency domain resource, and the PCI corresponding to the frequency domain resource, on the frequency domain resource used to monitor the paging message.

It should be understood that the communication apparatus may be configured to implement the steps performed by the terminal device in the paging message monitoring method shown in FIG. 9 in the embodiments of this application. For related features, refer to the foregoing descriptions. Details are not described herein again.

When the communication apparatus in this embodiment is a terminal device, refer to a device shown in FIG. 18. The device includes a processor 1801, an application processor, a memory, a user interface, and some other components (including a device such as a power supply that is not shown). In FIG. 18, the processor 1801 may be the processing unit, and completes a corresponding function. A radio transceiver 1803 in the figure may be the transceiver unit, and completes a corresponding function by using an antenna. It may be understood that the components shown in the figure are merely examples, and are not necessary components for completing this embodiment.

When the communication apparatus in this embodiment is a terminal device, refer to a device shown in FIG.

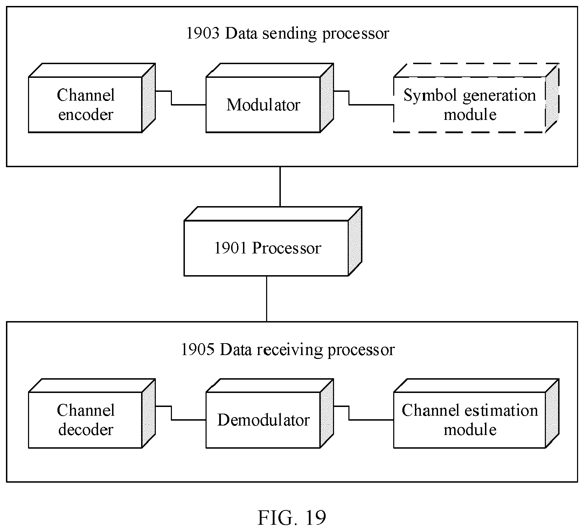

19. In an example, the device can implement a function similar to a function of the processor in FIG. 18. In FIG. 19, the device includes a processor, a data sending processor, and a data receiving processor. In FIG. 19, the processor 1901 may be the processing unit, and completes a corresponding function. The transceiver unit includes the data sending processor 1903 and the data receiving processor 1905 in FIG. 19. Although the figure shows a channel encoder and a channel decoder, it may be understood that these modules are merely examples, and do not constitute a limitation on this embodiment.

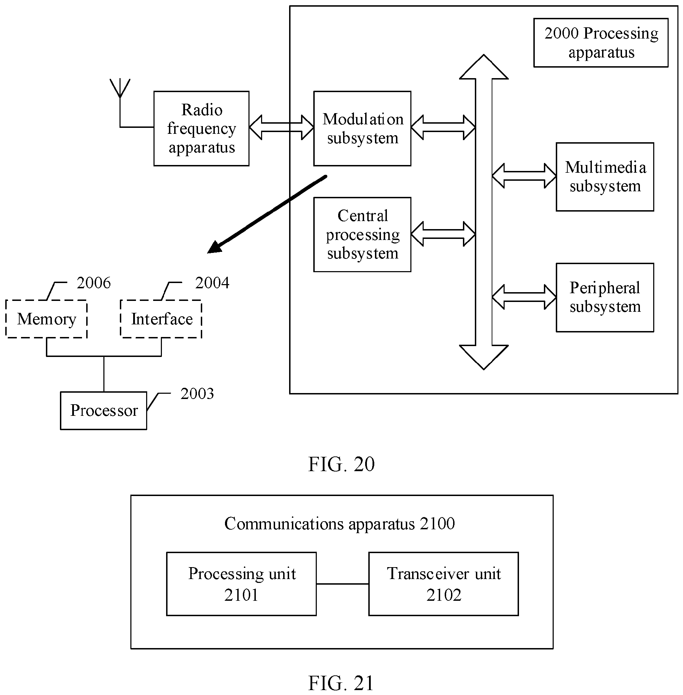

FIG. 20 shows another form of the communication apparatus in this embodiment. A processing apparatus 2000 includes modules such as a modulation subsystem, a central processing subsystem, and a peripheral subsystem. The communication apparatus in this embodiment may be used as the modulation subsystem in the processing apparatus 2000. Specifically, the modulation subsystem may include a processor 2003 and an interface 2004. The processor 2003 completes the function of the processing unit, and the interface 2004 completes the function of the transceiver unit. In another variant, the modulation subsystem includes a memory 2006, the processor 2003, and a program that is stored in the memory and is capable of being run on the processor. When the processor executes the program, the steps performed by the terminal device in the paging message monitoring method shown in FIG. 9 are implemented. It should be noted that the memory 2006 may be a non-volatile memory, or may be a volatile memory. The memory 2006 may be located in the modulation subsystem, or may be located in the processing apparatus 2000, provided that the memory 2006 can be connected to the processor 2003.

In another form of this embodiment, a computer-readable storage medium is provided. The computer-readable storage medium stores instruction(s); when the instruction(s) is/are executed, the paging message monitoring method in the embodiments of this application is implemented.

When the communication apparatus is a chip apparatus or circuit, the apparatus may include a transceiver unit and a processing unit. The transceiver unit may be an input/output circuit and/or a communications interface. The processing unit is an integrated processor or a microprocessor, or an integrated circuit.

Based on a same concept, an embodiment of this application provides a communication apparatus. The communication apparatus implements a function of the network device in the paging message monitoring method shown in FIG. 9. The communication apparatus may be a network device, or may be hardware implementing a similar function. As shown in FIG. 21, the communication apparatus 2100 in this embodiment of this application includes a processing unit 2101 and a transceiver unit 2102. The processing unit 2101 is configured to generate frequency domain configuration information, where the frequency domain configuration information indicates Q frequency domain resources, and Q is a positive integer greater than or equal to 1; and the transceiver unit 2102 is configured to send the frequency domain configuration information to a terminal device.

Optionally, the frequency domain configuration information further indicates an index corresponding to each of the Q frequency domain resources, where an identifier of the terminal device and an index corresponding to a frequency domain resource used by the terminal device to monitor a paging message meet a preset relationship.

Optionally, the identifier of the terminal device and the index corresponding to the frequency domain resource used by the terminal device to monitor the paging message meet:

$$\text{index}=P \bmod Q; \text{ or index}=P \bmod (Q+1),$$

where
index is the index associated with the frequency domain resource used by the terminal device to monitor the paging message, and P is a ratio of the identifier of the terminal device to a quantity of paging occasions in one paging cycle, or P is a value obtained after the identifier of the terminal device is reversed.

Optionally, the frequency domain resource configuration information includes a carrier of each of the Q frequency domain resources and a bandwidth of each of the Q frequency domain resources.

Optionally, the frequency domain configuration information further includes at least one of a control resource set of each of the Q frequency domain resources, search space corresponding to each of the Q frequency domain resources, and a correspondence between each of the Q frequency domain resources and a physical cell identifier PCI.

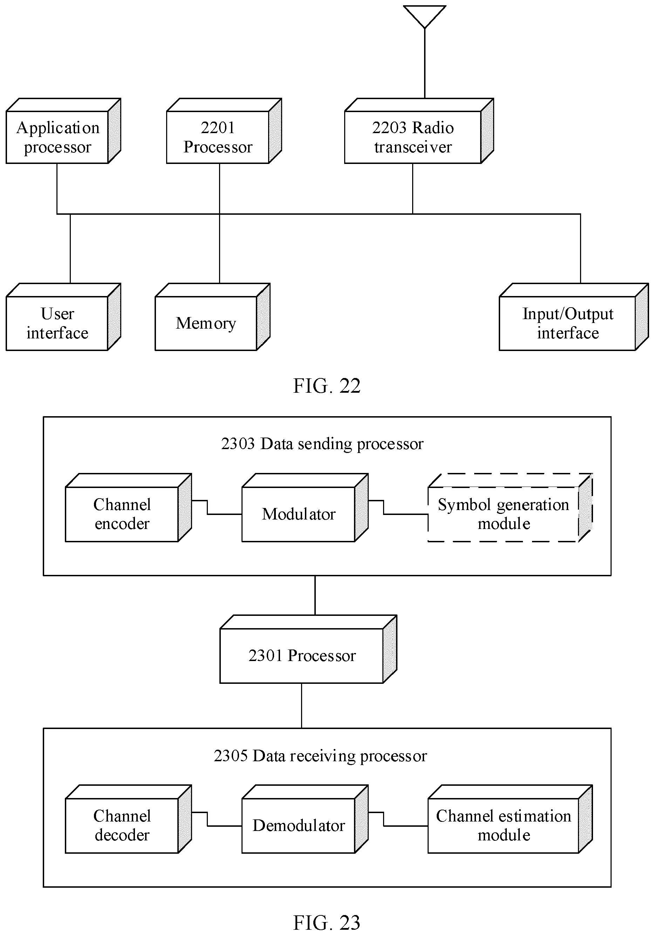

When the communication apparatus in this embodiment is a network device, refer to a device shown in FIG. 22. The device includes a processor 2201, an application processor, a memory, a user interface, and some other components (including a device such as a power supply that is not shown). In FIG. 22, the processor 2201 may be the processing unit, and completes a corresponding function. A radio transceiver 2203 in the figure may be the transceiver unit, and completes a corresponding function by using an antenna. It may be understood that the components shown in the figure are merely examples, and are not necessary components for completing this embodiment.

When the communication apparatus in this embodiment is a network device, refer to a device shown in FIG. 23. In an example, the device can implement a function similar to a function of the processor in FIG. 22. In FIG. 23, the device includes a processor, a data sending processor, and a data receiving processor. In FIG. 23, the processor 2301 may be the processing unit, and completes a corresponding function. The data sending processor 2303 and the data receiving processor 2305 in FIG. 23 may be the transceiver unit. Although the figure shows a channel encoder and a channel decoder, it may be understood that these modules are merely examples, and do not constitute a limitation on this embodiment.

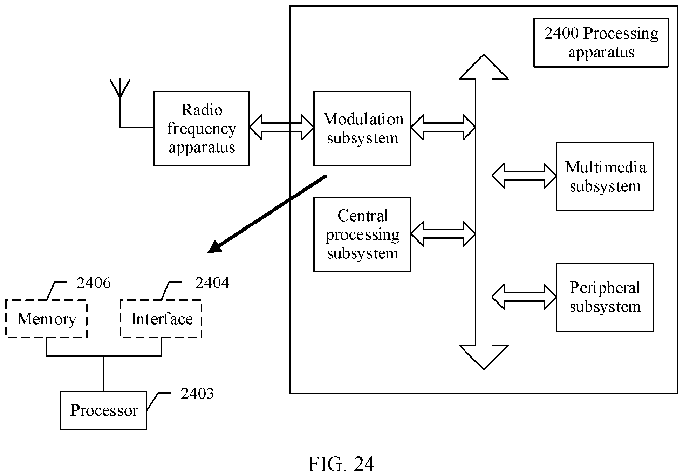

FIG. 24 shows another form of the communication apparatus in this embodiment. A processing apparatus 2400 includes modules such as a modulation subsystem, a central processing subsystem, and a peripheral subsystem. The communication apparatus in this embodiment may be used as the modulation subsystem in the processing apparatus 2400. Specifically, the modulation subsystem may include a processor 2403 and an interface 2404. The processor 2403 completes the function of the processing unit, and the interface 2404 completes the function of the transceiver unit. In another variant, the modulation subsystem includes a memory 2406, the processor 2403, and a program that is stored in the memory and is capable of being run on the processor. When the processor executes the program, the paging message monitoring method shown in FIG. 9 is implemented. It should be noted that the memory 2406 may be a non-volatile memory, or may be a volatile memory. The memory 2406 may be located in the modulation subsystem, or may be located in the processing apparatus 2400, provided that the memory 2406 can be connected to the processor 2403.

In another form of this embodiment, a computer-readable storage medium is provided. The computer-readable storage medium stores instruction(s); when the instruction(s) is/are executed, the steps performed by the network device in the paging message monitoring method shown in FIG. 9 are implemented.

An embodiment of this application further provides a communication apparatus. The communication apparatus may perform the steps performed by the terminal device in the paging message monitoring method shown in FIG. 2. The communication apparatus may be a terminal, or may be hardware implementing a similar function.

The communication apparatus includes at least one processor. The processor is coupled to a memory, and the processor is configured to read instruction(s) in the memory, and perform, according to the instruction(s), the steps performed by the terminal device in the paging message monitoring method shown in FIG. 2.

An embodiment of this application further provides a communication apparatus. The communication apparatus may perform the steps performed by the network device in the paging message monitoring method shown in FIG. 2. The communication apparatus may be a network device, or may be hardware implementing a similar function.

The communication apparatus includes at least one processor. The processor is coupled to a memory, and the processor is configured to read instruction(s) in the memory, and perform, according to the instruction(s), the steps performed by the network device in the paging message monitoring method shown in FIG. 2.

An embodiment of this application further provides a communication apparatus. The communication apparatus may perform the steps performed by the terminal device in the paging message monitoring method shown in FIG. 9. The communication apparatus may be a terminal, or may be hardware implementing a similar function.

The communication apparatus includes at least one processor. The processor is coupled to a memory, and the processor is configured to read instruction(s) in the memory, and perform, according to the instruction(s), the steps performed by the terminal device in the paging message monitoring method shown in FIG. 9.

An embodiment of this application further provides a communication apparatus. The communication apparatus may perform the steps performed by the network device in the paging message monitoring method shown in FIG. 9. The communication apparatus may be a network device, or may be hardware implementing a similar function.

The communication apparatus includes at least one processor. The processor is coupled to a memory, and the processor is configured to read instruction(s) in the memory, and perform, according to the instruction(s), the steps performed by the network device in the paging message monitoring method shown in FIG. 9.

It should be noted that the memory in the foregoing embodiments may be integrated into the processor, or may be independent of the processor. This is not limited in this embodiment.

The processor in the foregoing embodiments may be a general purpose processor, a digital signal processor (digital signal processor, DSP), an application-specific integrated circuit (application specific integrated circuit, ASIC), a field programmable gate array (field programmable gate array, FPGA) or another programmable logical device, a discrete gate or transistor logic device, or a discrete hardware component. It may implement or perform the methods, steps, and logical block diagrams that are disclosed in the embodiments of the present invention. The general purpose processor may be a microprocessor, or the processor may be any conventional processor or the like. The steps of the methods disclosed with reference to the embodiments of the present invention may be directly performed and accomplished by using a hardware decoding processor, or may be performed and accomplished by using a combination of hardware and a software module in the decoding processor. The software module may be located in a mature storage medium in the art, such as a random access memory (random access memory, RAM), a flash memory, a read-only memory (read-only memory, ROM), a programmable read-only memory, an electrically erasable programmable memory, a register, or the like. The storage medium is located in the memory, and the processor reads instruction(s) in the memory and completes the steps in the foregoing methods in combination with the hardware of the processor.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may implement the described functions by using a different method for each specific application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes one or more instructions for instructing a computer device (which may be a personal computer, a server, a network device, or the like) or a processor (processor) to perform all or some of the steps of the methods described in the embodiments of this application. The foregoing storage medium includes: any medium that can store program code, such as a USB flash drive, a removable hard disk, a ROM, a RAM, a magnetic disk, or an optical disc.

Further embodiments of the present invention are provided in the following. It should be noted that the numbering used in the following section does not necessarily need to comply with the numbering used in the previous sections.

Embodiment 1. A method for monitoring paging message, comprising:

receiving, by a terminal device, paging occasion configuration information sent by a network device, wherein the paging occasion configuration information indicates N time domain resources in a paging occasion, and N is a positive integer greater than or equal to 1; and

monitoring, by the terminal device based on the N time domain resources, a paging message sent by the network device.

Embodiment 2. The method according to embodiment 1, wherein the paging occasion configuration information comprises at least one of the following information:

a quantity of the time domain resources;
duration of each time domain resource;
duration of an interval between every two adjacent time domain resources; and
time domain position offset information, wherein the time domain position offset information indicates an offset of a first time domain position relative to a second time domain position, the first time domain position is a start position of a time domain resource ranking first in a time sequence, and the second time domain position is any time domain position in a synchronization signal block, or the second time domain position is a start time domain position of a paging frame.

Embodiment 3. The method according to embodiment 1 or 2, wherein the time domain position offset information comprises first offset information and second offset information;

the first offset information indicates an offset of a start position of the paging occasion relative to the second time domain position; and

the second offset information indicates an offset of the first time domain position relative to the start position of the paging occasion.

Embodiment 4. The method according to any one of embodiments 1 to 3, wherein the method further comprises:

determining, by the terminal device, a quantity M of beams used for communication with the network device, wherein M is a positive integer greater than or equal to 1; and

dividing, by the terminal device, the N time domain resources into M time units, wherein each of the M beams corresponds to one of the M time units, and the M beams correspond to different time units; and

the monitoring, by the terminal device based on the N time domain resources, a paging message sent by the network device comprises:

monitoring, by the terminal device in a time unit corresponding to each of at least one beam in the M beams, the paging message sent by the network device.

Embodiment 5. The method according to embodiment 4, wherein the determining, by the terminal device, a quantity M of beams used for communication with the network device comprises:

determining, by the terminal device based on a quantity of beams actually by the network device to send synchronization signal blocks to the terminal device, the quantity M of beams used for communication with the network device.

Embodiment 6. The method according to embodiment 4, wherein the method further comprises:

receiving, by the terminal device, beam configuration information sent by the network device, wherein the beam configuration information indicates the quantity of beams used for communication with the network device, or the beam configuration information indicates duration for monitoring the paging message on a beam; and

the determining, by the terminal device, a quantity M of beams used for communication with the network device comprises: determining, by the terminal device based on the beam configuration information, the quantity M of beams used for communication with the network device.

Embodiment 7. The method according to any one of embodiments 4 to 6, wherein the method further comprises:

determining, by the terminal device, the at least one beam in the M beams based on signal received quality corresponding to each of the M beams.

Embodiment 8. A method for sending indication information, comprising:

generating, by a network device, paging occasion configuration information, wherein the paging occasion configuration information indicates N time domain resources in a paging occasion, and N is a positive integer greater than or equal to 1; and

sending, by the network device, the paging occasion configuration information to a terminal device, wherein the paging occasion configuration information indicates the N time domain resources.

Embodiment 9. The method according to embodiment 8, wherein the paging occasion configuration information comprises at least one of the following information:

a quantity of the time domain resources;

duration of each time domain resource;

duration of an interval between every two adjacent time domain resources; and

time domain position offset information, wherein the time domain position offset information indicates an offset of a first time domain position relative to a second time domain position, the first time domain position is a start position of a time domain resource ranking first in a time sequence, and the second time domain position is any time domain position in a synchronization signal block, or the second time domain position is a start time domain position of a paging frame.

Embodiment 10. The method according to embodiment 8 or 9, wherein the time domain position offset information comprises first offset information and second offset information;

the first offset information indicates an offset of a start position of the paging occasion relative to the second time domain position; and

the second offset information indicates an offset of the first time domain position relative to the start position of the paging occasion.

Embodiment 11. The method according to any one of embodiments 8 to 10, wherein the method further comprises:

sending, by the network device, beam configuration information to the terminal device, wherein the beam configuration information indicates a quantity of beams used for communication with the network device, or the beam configuration information indicates duration for monitoring a paging message on a beam.

Embodiment 12. A communication apparatus, comprising a transceiver unit and a processing unit, wherein

the transceiver unit is configured to receive paging occasion configuration information sent by a network device, wherein the paging occasion configuration information indicates N time domain resources in a paging occasion, and N is a positive integer greater than or equal to 1; and
the processing unit is configured to monitor, based on the N time domain resources, a paging message sent by the network device.

Embodiment 13. The communication apparatus according to embodiment 12, wherein the paging occasion configuration information comprises at least one of the following information:

a quantity of the time domain resources;
duration of each time domain resource;
duration of an interval between every two adjacent time domain resources; and
time domain position offset information, wherein the time domain position offset information indicates an offset of a first time domain position relative to a second time domain position, the first time domain position is a start position of a time domain resource ranking first in a time sequence, and the second time domain position is any time domain position in a synchronization signal block, or the second time domain position is a start time domain position of a paging frame.

Embodiment 14. The communication apparatus according to embodiment 12 or 13, wherein the time domain position offset information comprises first offset information and second offset information;

the first offset information indicates an offset of a start position of the paging occasion relative to the second time domain position; and
the second offset information indicates an offset of the first time domain position relative to the start position of the paging occasion.

Embodiment 15. The communication apparatus according to any one of embodiments 12 to 14, wherein the processing unit is further configured to:

determine a quantity M of beams used for communication with the network device, and divide the N time domain resources into M time units, wherein M is a positive integer greater than or equal to 1, each of the M beams corresponds to one of the M time units, and the M beams correspond to different time units; and
that the processing unit is configured to monitor, based on the N time domain resources, a paging message sent by the network device specifically comprises:
the processing unit is configured to monitor, in a time unit corresponding to each of at least one beam in the M beams, the paging message sent by the network device.

Embodiment 16. The communication apparatus according to embodiment 15, wherein that the processing unit is configured to determine a quantity M of beams used for communication with the network device specifically comprises:
the processing unit is configured to determine, based on a quantity of beams actually used by the network device to send synchronization signal blocks to the terminal device, the quantity M of beams used for communication with the network device.

Embodiment 17. The communication apparatus according to embodiment 15, wherein the transceiver unit is further configured to:

receive beam configuration information sent by the network device, wherein the beam configuration information indicates the quantity of beams used for communication with the network device, or the beam configuration information indicates duration for monitoring the paging message on a beam; and
that the processing unit is configured to determine a quantity M of beams used for communication with the network device specifically comprises:
the processing unit is configured to determine, based on the beam configuration information, the quantity M of beams used for communication with the network device.

Embodiment 18. The communication apparatus according to any one of embodiments 15 to 17, wherein the processing unit is further configured to:
determine the at least one beam in the M beams based on signal received quality corresponding to each of the M beams.

Embodiment 19. A communication apparatus, comprising a processing unit and a transceiver unit, wherein

the processing unit is configured to generate paging occasion configuration information, wherein the paging occasion configuration information indicates N time domain resources in a paging occasion, and N is a positive integer greater than or equal to 1; and
the transceiver unit is configured to send the paging occasion configuration information to a terminal device, wherein the paging occasion configuration information indicates the N time domain resources.

Embodiment 20. The communication apparatus according to embodiment 19, wherein the paging occasion configuration information comprises at least one of the following information:

a quantity of the time domain resources;
duration of each time domain resource;
duration of an interval between every two adjacent time domain resources; and
time domain position offset information, wherein the time domain position offset information indicates an offset of a first time domain position relative to a second time domain position, the first time domain position is a start position of a time domain resource ranking first in a time sequence, and the second time domain position is any time domain position in a synchronization signal block, or the second time domain position is a start time domain position of a paging frame.

Embodiment 21. The communication apparatus according to embodiment 19 or 20, wherein the time domain position offset information comprises first offset information and second offset information;

the first offset information indicates an offset of a start position of the paging occasion relative to the second time domain position; and

the second offset information indicates an offset of the first time domain position relative to the start position of the paging occasion. Embodiment 22. The communication apparatus according to any one of embodiments 19 to 21, wherein the transceiver unit is further configured to:
send beam configuration information to the terminal device, wherein the beam configuration information indicates a quantity of beams used for communication with the network device, or the beam configuration information indicates duration for monitoring a paging message on a beam.

Embodiment 23. A communications system, comprising the communication apparatus according to any one of embodiments 12 to 18 and the communication apparatus according to any one of embodiments 19 to 22.

Embodiment 24. A computer-readable storage medium storing a computer program, wherein when the program is executed by a processor, the communication method according to any one of embodiments 1 to 7 is carried out.

Embodiment 25. A computer-readable storage medium storing a computer program, wherein when the program is executed by a processor, the communication method according to any one of embodiments 8 to 11 is carried out.

Embodiment 26. A communication apparatus, comprising a memory, a processor, and a program that is stored in the memory and is capable of being run on the processor, wherein when the processor executes the program, the communication method according to any one of embodiments 1 to 7 is carried out.

Embodiment 27. A communication apparatus, comprising a memory, a processor, and a program that is stored in the memory and is capable of being run on the processor, wherein when the processor executes the program, the communication method according to any one of embodiments 8 to 11 is carried out.

The foregoing descriptions are merely specific embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

**1.** A method for monitoring paging message, comprising:

receiving paging occasion configuration information from a network device, wherein the paging occasion configuration information indicates N time domain resources in a paging occasion, and N is a positive integer greater than or equal to 1; and

monitoring, based on the N time domain resources, a paging message from the network device;

wherein the paging occasion configuration information comprises time domain position offset information indicating an offset of a first time domain position relative to a second time domain position, the first time domain position is a start position of a first time domain resource in a time sequence in the N time domain resources, and the second time domain position is a start position of a paging frame, wherein the first time domain resource is a time domain resource that ranks first in a time sequence in the N time domain resources and the paging frame is a radio frame comprising the first time domain resource; and

wherein the paging occasion configuration information further comprises at least one of the following information:

duration of the time domain resource; or
duration of an interval between two adjacent time domain resources.

2. The method according to claim 1, wherein the time domain position offset information comprises first offset information and second offset information;

the first offset information indicates an offset of a start position of the paging occasion relative to the second time domain position; and

the second offset information indicates an offset of the first time domain position relative to the start position of the paging occasion.

3. The method according to any one of claims 1 or 2, wherein the method further comprises:

determining a quantity M of synchronization signal blocks used for communication with the network device, wherein M is a positive integer greater than or equal to 1; and

the N time domain resources correspond to M time units, and each of the M synchronization signal blocks corresponds to one of the M time units; and

the monitoring, based on the N time domain resources, a paging message from the network device comprises:
monitoring the paging message from the network device in a time unit corresponding to each of at least one synchronization signal block in the M synchronization signal blocks.

4. The method according to claim 3, wherein the determining a quantity M of synchronization signal blocks used for communication with the network device comprises:
determining, based on a quantity of synchronization signal blocks actually sent from the network device, the quantity M of synchronization signal blocks used for communication with the network device.

5. The method according to claim 3, wherein the method further comprises:

receiving synchronization signal block configuration information from the network device, wherein the synchronization signal block configuration information indicates the quantity of synchronization signal blocks used for communication with the network device, or the synchronization signal block configuration information indicates duration for monitoring the paging message on a synchronization signal block; and

the determining a quantity M of synchronization signal blocks used for communication with the network device comprises:
determining, based on the synchronization signal block configuration information, the quantity M of synchronization signal blocks used for communication with the network device.

6. The method according to any one of claims 3 to 5, wherein the method further comprises:
determining the at least one synchronization signal block in the M synchronization signal blocks based on signal received quality corresponding to each of the M synchronization signal blocks.

7. The method according to any one of claims 3 to 6, wherein

the M synchronization signal blocks correspond to different time units; and/or
duration for monitoring the paging message on each of the M synchronization signal blocks is the same.

8. A method for sending indication information, comprising:

Generating, paging occasion configuration information, wherein the paging occasion configuration information indicates N time domain resources in a paging occasion, and N is a positive integer greater than or equal to 1; and Sending, the paging occasion configuration information to a terminal device, wherein the paging occasion configuration information indicates the N time domain resources;

wherein the paging occasion configuration information comprises time domain position offset information indicating an offset of a first time domain position relative to a second time domain position, the first time domain position is a start position of a first time domain resource in a time sequence in the N time domain resources, and the second time domain position is a start position of a paging frame, wherein the first time domain resource is a time domain resource that ranks first in a time sequence in the N time domain resources and the paging frame is a radio frame comprising the first time domain resource; and

wherein the paging occasion configuration information further comprises at least one of the following information:

duration of the time domain resource; or
duration of an interval between two adjacent time domain resources.

9. The method according to claim 8, wherein the time domain position offset information comprises first offset information and second offset information;

the first offset information indicates an offset of a start position of the paging occasion relative to the second time domain position; and
the second offset information indicates an offset of the first time domain position relative to the start position of the paging occasion.

10. The method according to any one of claims 8 or 9, wherein the method further comprises:
sending, synchronization signal block configuration information to the terminal device, wherein the synchronization signal block configuration information indicates a quantity of synchronization signal blocks used for communication with the network device, or the synchronization signal block configuration information indicates duration for monitoring a paging message on a synchronization signal block.

11. A communication apparatus, comprising:

means for performing the method according to any one of claims 1 to 7; or
means for performing the method according to any one of claims 8 to 10.

12. A computer-readable storage medium, wherein the computer-readable storage medium stores one or more computer instructions, which when executed by a processor, the method according to any one of claims 1 to 7 or any one of claims 8 to 10 is carried out.

13. A communications system, comprising a network device configured to perform any one of claims 8 to 10 and a terminal device configured to perform any one of claims 1 to 7.

FIG. 1

Step 210: Generate paging occasion configuration information

Step 220: Paging occasion configuration information

Step 230: Monitor, based on N time domain resources, a paging message sent by the network device

FIG. 2

Paging occasion

Time domain
resource 1

Time domain
resource 2

Time domain
resource 3

Time domain
resource a

Time domain
resource b

Time domain
resource c

Time domain
resource d

Time domain

FIG. 3a

Paging occasion

Time domain
resource 1

Time domain
resource 2

Time domain
resource 3

System
message

Uplink data

Time domain
resource A

Time domain
resource B

Time domain

FIG. 3b

Paging occasion

Time domain resource 1

Time domain resource 2

Time domain resource 3

Duration 4

Duration 5

Duration 1

Duration 2

Duration 3

A

Synchronization signal block

Duration 6

B

Time domain

FIG. 4

Radio frame 1      Radio frame 2

Time domain
resource 1

FIG. 5a

Radio frame     Radio frame     Radio frame

Time
domain
resource 1

Time
domain
resource 2

Time domain
resource 3

Paging frame

Time domain

FIG. 5b

Paging occasion

Synchronization
signal block

Time domain
resource 1

Time domain
resource 2

Time domain
resource 3

Duration 0

Duration 4

Duration 5

Time
domain

B

Duration 7

Duration 1

Duration 2

Duration 3

A

FIG. 6

FIG. 7

FIG. 8

Network device                Terminal device

Step 910: Generate frequency domain configuration information

Step 920: Frequency domain configuration information

Step 930: Determine a frequency domain resource used to monitor a paging message, and monitor, on the determined frequency domain resource, a paging message sent by the network device.

FIG. 9

Frequency domain

Broadband carrier

P7
P6
P5
P4
P3
P2
P1
P0

Cell 1

Cell 2

Cell 3

Paging occasion

Time domain

FIG. 10

Application processor

1101 Processor

1103 Radio transceiver

User interface

Memory

Camera

Input/Output interface

FIG. 11

1203 Data sending processor

Channel encoder

Modulator

Symbol generation module

1201 Processor

1205 Data receiving processor

Channel decoder

Demodulator

Channel estimation module

FIG. 12

1300 Processing
apparatus

Radio
frequency
apparatus

Modulation
subsystem

Multimedia
subsystem

Central
processing
subsystem

Peripheral
subsystem

1306

1304

Memory

Interface

1303

Processor

FIG. 13

Communications apparatus 1400

Processing unit
1401

Transceiver unit
1402

FIG. 14

Application processor

1501 Processor

1503 Radio transceiver

User interface

Memory

Input/Output interface

FIG. 15

1603 Data sending processor

Channel encoder

Modulator

Symbol generation module

1601 Processor

1605 Data receiving processor

Channel decoder

Demodulator

Channel estimation module

FIG. 16

1700 Processing apparatus

Radio frequency apparatus

Modulation subsystem

Multimedia subsystem

Central processing subsystem

Peripheral subsystem

1706

1704

Memory

Interface

1703

Processor

FIG. 17

Application processor

1801 Processor

1803 Radio transceiver

User interface

Memory

Camera

Input/Output interface

FIG. 18

**1903 Data sending processor**

Channel encoder — Modulator — Symbol generation module

**1901 Processor**

**1905 Data receiving processor**

Channel decoder — Demodulator — Channel estimation module

FIG. 19

FIG. 20

FIG. 21

FIG. 22

FIG. 23

FIG. 24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810298396